# EUROPEAN PATENT APPLICATION

(11) **EP 4 668 450 A1**
(43) Date of publication of application: **24.12.2025**
(21) Application number: 23947032.1
(22) Date of filing: 31.07.2023
(51) Int. Cl.: H01M 50/342, H01M 50/209

(54) **BATTERY CELL, BATTERY, AND ELECTRIC DEVICE**

(71) Applicant: Contemporary Amperex Technology Co., Limited, Ningde, Fujian 352100 (CN)
(72) Inventor: KE, Haibo, Ningde, Fujian 352100 (CN); LI, Quankun, Ningde, Fujian 352100 (CN); WANG, Peng, Ningde, Fujian 352100 (CN); JI, Kaixiao, Ningde, Fujian 352100 (CN); CHEN, Xinxiang, Ningde, Fujian 352100 (CN); YANG, Kaihuan, Ningde, Fujian 352100 (CN)
(74) Representative: Gong, Jinping
(86) International application number: PCT/CN2023/110314
(87) International publication number: WO 2025/025083

(57) **Abstract**

Embodiments of the present application provide a battery cell, a battery, and an electric apparatus. The battery cell includes a housing and a pressure relief component. The housing includes a first wall portion, the first wall portion is provided with a first groove, the first groove includes a groove side surface and a first groove bottom surface, the groove side surface surrounds the first groove bottom surface, and the first groove bottom surface is provided with a pressure relief hole. The pressure relief component is disposed within the first groove, the pressure relief component abuts against the first groove bottom surface and covers the pressure relief hole. At least a portion of the groove side surface along a circumferential direction of the first groove forms a gap with the pressure relief component. When the first wall portion deforms due to swelling of the battery cell, the gap between the pressure relief component and the groove side surface provides a buffer space for the pressure relief component, reducing the risk of the groove side surface squeezing the pressure relief component and causing deformation of the pressure relief component, thereby reducing the risk of the pressure relief component opening prematurely during normal use of the battery cell, improving the service life of the pressure relief component, and further improving the service life of the battery cell.

## Description

### TECHNICAL FIELD

The present application relates to the field of battery technology, and more particularly, to a battery cell, a battery, and an electric apparatus.

### BACKGROUND

Batteries are widely used in electronic devices such as mobile phones, laptops, battery carts, electric vehicles, electric aircrafts, electric ships, electric toy cars, electric toy ships, electric toy aircrafts, and electric tools.

In battery technology, a pressure relief component can be provided in a battery cell to release pressure through the pressure relief component during thermal runaway of the battery cell. For a typical battery cell, the pressure relief component may open prematurely during normal use of the battery cell, affecting the service life of the battery cell. Therefore, improving the service life of the battery cell is a critical technical problem in battery technology that urgently needs to be addressed.

### SUMMARY

Embodiments of the present application provide a battery cell, a battery, and an electric apparatus, capable of effectively improving the service life of the battery cell.

According to a first aspect, an embodiment of the present application provides a battery cell including: a housing and a pressure relief component; where the housing includes a first wall portion, the first wall portion is provided with a first groove, the first groove includes a groove side surface and a first groove bottom surface, the groove side surface surrounds the first groove bottom surface, and the first groove bottom surface is provided with a pressure relief hole; and the pressure relief component is disposed within the first groove, and the pressure relief component abuts against the first groove bottom surface and covers the pressure relief hole; where at least a portion of the groove side surface along a circumferential direction of the first groove forms a gap with the pressure relief component.

In the above technical solution, at least a portion of the groove side surface along the circumferential direction of the first groove forms a gap with the pressure relief component. When the first wall portion deforms due to swelling of the battery cell, the gap between the pressure relief component and the groove side surface provides a buffer space for the pressure relief component, reducing the risk of the groove side surface squeezing the pressure relief component and causing deformation of the pressure relief component, thereby reducing the risk of the pressure relief component opening prematurely during normal use of the battery cell, improving the service life of the pressure relief component, and further improving the service life of the battery cell.

In some embodiments, the groove side surface includes a first region forming a gap with the pressure relief component; along the circumferential direction of the first groove, a length of the first region is denoted as L₁, and a perimeter of the groove side surface is denoted as L, satisfying: 0.2 ≤ L₁/L ≤ 1. This configuration ensures that a relatively long portion of the groove side surface along the circumferential direction forms a gap with the pressure relief component, reducing the extent of squeezing of the pressure relief component by the groove side surface when the first wall portion deforms, further reducing the risk of the pressure relief component opening prematurely during normal use of the battery cell.

In some embodiments, 0.5 ≤ L₁/L ≤ 1.

In some embodiments, the entire groove side surface along the circumferential direction of the first groove forms a gap with the pressure relief component. This configuration ensures that the entire circumference of the groove side surface forms a gap with the pressure relief component, the gap being an annular structure surrounding the pressure relief component, further reducing the squeezing effect of the groove side surface on the pressure relief component when the first wall portion deforms, further reducing the risk of the pressure relief component opening prematurely during normal use of the battery cell.

In some embodiments, the pressure relief component is welded to a groove bottom wall of the first groove, forming a weld mark portion. This configuration secures the pressure relief component to the first wall portion, enhancing the connection strength between the pressure relief component and the first wall portion.

In some embodiments, along a thickness direction of the first wall portion, a projection of the weld mark portion is entirely located within the pressure relief component. This configuration allows the pressure relief component to be welded to the groove bottom wall of the first groove through penetration welding, which is a simple welding method. The weld mark portion formed after welding can pass through the pressure relief component and embed into the groove bottom wall of the first groove, enhancing the connection strength between the pressure relief component and the first wall portion. Additionally, since the projection of the weld mark portion along the thickness direction of the first wall portion is located within the pressure relief component, the weld mark portion does not protrude beyond the edge of the pressure relief component, ensuring that the weld mark portion is not located within the gap between the pressure relief component and the groove side surface, reducing the risk of the groove side surface squeezing the pressure relief component via the weld mark portion when the first wall portion deforms.

In some embodiments, the pressure relief component and the groove bottom wall have an overlapping region, the overlapping region includes a first welding region located in the pressure relief component and a second welding region located in the groove bottom wall, the second welding region defines the pressure relief hole, and the first welding region and the second welding region are welded together, forming the weld mark portion; and along the thickness direction of the first wall portion, a minimum thickness of the first welding region is denoted as H₁, a minimum thickness of the second welding region is denoted as H₂, and a maximum height of the weld mark portion is denoted as H₃, satisfying: H₁ < H₃ ≤ H₁ + H₂. H₃ > H₁ ensures that a portion of the weld mark portion can embed into the second welding region, achieving a stable connection between the pressure relief component and the groove bottom wall; H₃ ≤ H₁ + H₂ ensures that the weld mark portion does not completely penetrate the second welding region, reducing the risk of the second welding region being welded through.

In some embodiments, 0.2 mm ≤ H₁ ≤ 1 mm. H₁ ≥ 0.2 mm ensures that the first welding region has sufficient thickness, providing sufficient strength to the first welding region; H₁ ≤ 1 mm ensures that the thickness of the first welding region is not excessively large, facilitating reduced welding power and improved welding effects.

In some embodiments, 0.45 mm ≤ H₁ ≤ 0.75 mm.

In some embodiments, 0.2 mm ≤ H₂ ≤ 5 mm. H₂ ≥ 0.2 mm ensures that the second welding region has sufficient thickness, reducing the risk of the second welding region being welded through; and H₂ ≤ 5 mm ensures that the thickness of the second welding region is not excessively large, saving material and providing better economic efficiency.

In some embodiments, 0.8 mm ≤ H₂ ≤ 3 mm.

In some embodiments, along a first direction, at least one end of the pressure relief component forms a first side surface, the groove side surface includes a second side surface facing the first side surface, a gap is formed between the first side surface and the second side surface, and the first direction intersects with the thickness direction of the first wall portion. Since a gap is formed between the first side surface and the second side surface, when the wall portion deforms, the second side surface is less likely to squeeze the first side surface along the first direction, reducing the risk of deformation of the pressure relief component due to squeezing forces in the first direction.

In some embodiments, the first side surface is parallel to the second side surface. This configuration ensures that the distance between the first side surface and the second side surface does not significantly change along a depth direction of the first groove, making it difficult for the second side surface to squeeze the first side surface along the first direction.

In some embodiments, the second side surface is parallel to the thickness direction of the first wall portion. This configuration facilitates reducing the forming difficulty of the first groove.

In some embodiments, a distance between the first side surface and the second side surface along the first direction gradually decreases along a depth direction of the first groove. When the first wall portion deforms, the portion of the second side surface closer to the first groove bottom surface has a smaller deformation amount, exerting less squeezing force on the first side surface, while the portion of the second side surface closer to an opening of the first groove has a larger deformation amount, exerting greater squeezing force on the first side surface. Gradually reducing the distance between the first side surface and the second side surface along the first direction along the depth direction of the first groove can reduce the squeezing effect of the second side surface on the first side surface when the first wall portion deforms, and can also reduce the movement range of the pressure relief component along the first direction within the first groove during installation, reducing the installation difficulty of the pressure relief component.

In some embodiments, the second side surface is an inclined surface disposed at a non-zero angle with respect to the thickness direction of the first wall portion. By configuring the second side surface as an inclined surface, it facilitates gradually reducing the distance between the first side surface and the second side surface along the first direction along the depth direction of the first groove. During assembly, the inclined second side surface can guide the pressure relief component, facilitating entry of the pressure relief component into the first groove.

In some embodiments, at least a portion of a longitudinal section of the second side surface is arc-shaped, the longitudinal section being parallel to the first direction and the thickness direction of the first wall portion. This configuration facilitates gradually reducing the distance between the first side surface and the second side surface along the first direction along the depth direction of the first groove. During assembly, the second side surface can guide the pressure relief component, facilitating entry of the pressure relief component into the first groove.

In some embodiments, the first side surface is parallel to the thickness direction of the first wall portion. This configuration facilitates reducing the forming difficulty of the pressure relief component.

In some embodiments, the pressure relief component has a weak portion configured to be capable of rupturing to release internal pressure of the battery cell; and the pressure relief component is welded to the groove bottom wall of the first groove, forming the weld mark portion, along the first direction, the weld mark portion is at least partially located between the first side surface and the weak portion, a maximum distance between the first side surface and the second side surface is denoted as B₁, a minimum distance between the weld mark portion and the first side surface is denoted as B₂, and a minimum distance between the weld mark portion and the weak portion is denoted as B₃, satisfying: 0.3 ≤ (B₁ + B₂) / B₃ ≤ 2.5. This configuration can reduce the impact of the weld mark portion on the strength of the weak portion and reduce the squeezing effect of the second side surface on the first side surface when the first wall portion deforms, enhancing the buffering effect of the gap on the pressure relief component when the first wall portion deforms.

In some embodiments, 0.8 ≤ (B₁ + B₂) / B₃ ≤ 1.5.

In some embodiments, 0.05 mm ≤ B₁ ≤ 20 mm. B₁ ≥ 0.05 mm ensures a relatively large distance between the first side surface and the second side surface, reducing the squeezing effect of the second side surface on the first side surface when the first wall portion deforms; and B₁ ≤ 20 mm ensures that the distance between the first side surface and the second side surface is not excessively large, reducing the size of the first groove in the first direction and lowering the forming difficulty of the first groove.

In some embodiments, 1.5 mm ≤ B₁ ≤ 10 mm.

In some embodiments, 0.1 mm ≤ B₂ ≤ 20 mm. B₂ ≥ 0.1 mm ensures that the distance between the weld mark portion and the first side surface is not too small, reducing the risk of deformation in the region near the first side surface during welding of the pressure relief component, which could reduce the gap; and B₂ ≤ 20 mm ensures that the distance between the weld mark portion and the first side surface is not excessively large, avoiding the need for an overly large pressure relief component, facilitating miniaturization of the pressure relief component.

In some embodiments, 2 mm ≤ B₂ ≤ 10 mm.

In some embodiments, 1 mm ≤ B₃ ≤ 20 mm. B₃ ≥ 1 mm ensures sufficient distance between the weld mark portion and the weak portion, reducing the impact of the weld mark portion on the weak portion and preventing the burst pressure of the pressure relief component from being affected due to an excessively small distance between the weld mark portion and the weak portion; and B₃ ≤ 20 mm ensures that the distance between the weld mark portion and the weak portion is not excessively large, facilitating miniaturization of the pressure relief component.

In some embodiments, 3 mm ≤ B₃ ≤ 10 mm.

In some embodiments, the first wall portion is a rectangular wall portion, and the first direction is parallel to a length direction of the first wall portion. Since the first direction is parallel to the length direction of the first wall portion, a gap is formed between the first side surface and the second side surface in the length direction of the first wall portion, meaning that a gap is formed between the pressure relief component and the groove side surface of the first groove along the length direction of the first wall portion. As the first wall portion is a rectangular wall portion, during swelling of the battery cell, the deformation amount of the first wall portion along the length direction is greater, and this gap can provide a buffer space for the pressure relief component along the length direction of the first wall portion, reducing the risk of the groove side surface squeezing the pressure relief component along the length direction of the first wall portion and causing deformation of the pressure relief component.

In some embodiments, along the thickness direction of the first wall portion, the pressure relief component is located on a side of the pressure relief hole facing away from the interior of the housing. This configuration allows the pressure relief component to be installed on an outer side of the first wall portion, making installation of the pressure relief component more convenient.

In some embodiments, the battery cell further includes a protective component, along the thickness direction of the first wall portion, the protective component is located on a side of the pressure relief component facing away from the interior of the housing, and the protective component covers the first groove. The protective component can protect the pressure relief component, reducing the risk of external substances (impurities and electrolyte) entering the first groove and corroding the pressure relief component.

In some embodiments, along the thickness direction of the first wall portion, the first wall portion has an outer surface facing away from the interior of the housing, the outer surface is provided with a second groove, the first groove is disposed on a groove bottom surface of the second groove, and the protective component is at least partially accommodated within the second groove. This configuration can reduce the height by which the protective component protrudes from the outer surface of the first wall portion, minimizing the space occupied by the protective component outside the housing.

In some embodiments, along the thickness direction of the first wall portion, the pressure relief component is located on a side of the pressure relief hole facing the interior of the housing. This configuration allows the pressure relief component to be installed on an inner side of the first wall portion, enabling the first wall portion to protect the pressure relief component, reducing the risk of damage to the first wall portion by external components.

In some embodiments, the battery cell further includes a protective component, along the thickness direction of the first wall portion, the protective component is located on a side of the pressure relief hole facing away from the interior of the housing, and the protective component covers the pressure relief hole. The protective component can protect the pressure relief component, reducing the risk of external substances (impurities and electrolyte) entering the pressure relief hole and corroding the pressure relief component.

In some embodiments, the housing includes a shell and an end cap, the shell has an opening, and the end cap closes the opening; where the end cap is the first wall portion; and/or at least one wall portion of the shell is the first wall portion.

According to a second aspect, an embodiment of the present application provides a battery including the battery cell provided in any one of the embodiments of the first aspect.

According to a third aspect, an embodiment of the present application provides an electric apparatus including the battery cell provided in any one of the embodiments of the first aspect.

### BRIEF DESCRIPTION OF DRAWINGS

To more clearly illustrate the technical solutions of the embodiments of the present application, the drawings required for use in the embodiments are briefly described below. It should be understood that the following drawings only show certain embodiments of the present application and should not be considered as limiting the scope. For those skilled in the art, other related drawings can be obtained based on these drawings without creative effort.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a cross-sectional view of a battery cell according to some embodiments of the present application;
FIG. 5 is an isometric view of the battery cell shown in FIG. 4 (with the pressure relief component separated from the first wall portion);
FIG. 6 is a partial view of the pressure relief component and the first wall portion shown in FIG. 5 after assembly;
FIG. 7 is a partial view of the first wall portion shown in FIG. 6;
FIG. 8 is a top view of the pressure relief component and the first wall portion assembled according to some embodiments of the present application;
FIG. 9 is a top view of the first wall portion shown in FIG. 8;
FIG. 10 is a top view of the pressure relief component and the first wall portion assembled according to some other embodiments of the present application;
FIG. 11 is a partial view of the pressure relief component and the first wall portion assembled according to some embodiments of the present application;
FIG. 12 is a partial view of the pressure relief component and the first wall portion assembled according to some other embodiments of the present application;
FIG. 13 is a partial view of the pressure relief component and the first wall portion assembled according to some further embodiments of the present application;
FIG. 14 is a partial enlarged view at A of the battery cell shown in FIG. 4;
FIG. 15 is an isometric view of a battery cell according to some other embodiments of the present application (with both the pressure relief component and the protective component separated from the first wall portion);
FIG. 16 is a partial view of a battery cell according to some embodiments of the present application;
FIG. 17 is a partial view of a battery cell according to some other embodiments of the present application;
FIG. 18 is a partial view of a battery cell according to some further embodiments of the present application;
FIG. 19 is an exploded view of a battery cell according to some other embodiments of the present application;
FIG. 20 is a cross-sectional view of the battery cell shown in FIG. 19;
FIG. 21 is a partial enlarged view at B of the battery cell shown in FIG. 20;
FIG. 22 is a partial view of the pressure relief component, protective component, and first wall portion assembled according to some other embodiments of the present application;
FIG. 23 is a partial view of the pressure relief component, protective component, and first wall portion assembled according to still some further embodiments of the present application;
FIG. 24 is an exploded view of a battery cell according to still some further embodiments of the present application; and
FIG. 25 is a cross-sectional view of the battery cell shown in FIG. 24.

Description of reference signs: 1. housing; 11. shell; 12. end cap; 13. first wall portion; 131. first groove; 1311. groove side surface; 1311a. first region; 1311b. second side surface; 1311c. third side surface; 1312. first groove bottom surface; 1313. groove bottom wall; 1313a. second welding region; 132. pressure relief hole; 133. weld mark portion; 134. first surface; 135. outer surface; 136. second groove; 137. protrusion; 2. electrode assembly; 21. tab; 3. electrode terminal; 4. current collecting member; 5. first insulating member; 6. second insulating member; 7. pressure relief component; 71. outer peripheral surface; 711. first side surface; 72. first welding region; 73. weak portion; 74. score groove; 75. recessed groove; 8. gap; 9. protective component; 10. battery cell; 20. box; 201. first portion; 202. second portion; 100. battery; 200. controller; 300. motor; 1000. vehicle; X. length direction; Y. width direction; and Z. thickness direction.

### DESCRIPTION OF EMBODIMENTS

To make the objectives, technical solutions, and advantages of the embodiments of the present application clearer, the technical solutions in the embodiments of the present application are described clearly below with reference to the drawings in the embodiments of the present application. Obviously, the described embodiments are part of the embodiments of the present application, not all embodiments. Based on the embodiments in the present application, all other embodiments obtained by those skilled in the art without creative effort fall within the protection scope of the present application.

Unless otherwise defined, all technical and scientific terms used in the present application have the same meaning as commonly understood by those skilled in the technical field of the present application; terms used in the specification of the present application are for the purpose of describing specific embodiments only and are not intended to limit the present application; the terms "including" and "having" and any variations thereof in the specification, claims, and the above description of drawings of the present application are intended to cover non-exclusive inclusion. In the specification, claims, or accompanying drawings of the present application, the terms "first," "second," and the like are intended to distinguish between different objects rather than to describe a particular order or a primary-secondary relationship.

Reference to "embodiment" in the present application means that a specific feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments.

The term "and/or" in the present application is merely an association relationship describing associated objects, indicating that three relationships may exist. For example, A and/or B may indicate: A exists alone, A and B exist simultaneously, and B exists alone. Additionally, the character "/" in the present application generally indicates an "or" relationship between the contextually associated objects.

In the embodiments of the present application, the same reference signs denote the same components. For brevity, detailed descriptions of the same components are not repeated in different embodiments. It should be understood that the thickness, length, width, and other dimensions of various components in the embodiments of the present application shown in the drawings, as well as the overall thickness, length, width, and other dimensions of an integrated device, are for illustrative purposes only and should not constitute any limitation to the present application.

The term "plurality" appearing in the present application refers to two or more (including two).

In the embodiments of the present application, the battery cell may be a secondary battery, where the secondary battery refers to a battery cell that can be recharged to activate active materials for continuous use after the battery cell is discharged.

Battery cells include, but are not limited to, lithium-ion batteries, sodium-ion batteries, sodium-lithium-ion batteries, lithium metal batteries, sodium metal batteries, lithium-sulfur batteries, magnesium-ion batteries, nickel-hydrogen batteries, nickel-cadmium batteries, and lead-acid batteries.

The battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is disposed between the positive electrode and the negative electrode, reducing the risk of short-circuiting between the positive and negative electrodes while allowing active ions to pass through.

In some embodiments, the positive electrode may be a positive electrode plate, and the positive electrode plate may include a positive electrode current collector and a positive electrode active material disposed on at least one surface of the positive electrode current collector.

In an example, the positive electrode current collector includes two back-to-back surfaces in a thickness direction of the positive electrode current collector, and the positive electrode active material is disposed on either or both of the two back-to-back surfaces of the positive electrode current collector.

In an example, the positive electrode current collector may be a metal foil current collector or a composite current collector. For example, as a metal foil, aluminum with a silver-plated surface, stainless steel with a silver-plated surface, stainless steel, copper, aluminum, nickel, carbon electrode, carbon, nickel, or titanium may be used. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compounds thereof. However, the present application is not limited to such materials and may alternatively use other conventional well-known materials that can be used as positive electrode active materials for batteries. These positive electrode active materials may be used alone or in combination of two or more. Examples of lithium-containing phosphates may include, but are not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon. Examples of lithium transition metal oxides may include, but are not limited to, at least one of lithium cobalt oxide (such as LiCoO₂), lithium nickel oxide (such as LiNiO₂), lithium manganese oxide (such as LiMnO₂ and LiMn2O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811)), lithium nickel cobalt aluminum oxide (such as LiNi_{0.85}Co_{0.15}Al_{0.05}O₂), and modified compounds thereof.

In some embodiments, the positive electrode may use a foam metal. The foam metal may be foam nickel, foam copper, foam aluminum, foam alloy, or foam carbon. When foam metal is used as the positive electrode, the surface of the foam metal may not be provided with a positive electrode active material, or it may be provided with a positive electrode active material. As an example, the foam metal may be filled or/and deposited with a lithium source material, potassium metal, or sodium metal, where the lithium source material is lithium metal and/or a lithium-rich material.

In some embodiments, the negative electrode may be a negative electrode plate, and the negative electrode plate may include a negative electrode current collector.

As an example, the negative electrode current collector may use a metal foil, foam metal, or composite current collector. For example, as the metal foil, the negative electrode current collector may use aluminum or stainless steel with a silver-plated surface, stainless steel, copper, aluminum, nickel, carbon electrode, carbon, nickel, or titanium. The foam metal may be foam nickel, foam copper, foam aluminum, foam alloy, or foam carbon. The composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the negative electrode plate may include a negative electrode current collector and a negative electrode active material disposed on at least one surface of the negative electrode current collector.

As an example, the negative electrode current collector has two opposing surfaces in its thickness direction, and the negative electrode active material is disposed on either or both of the two opposing surfaces of the negative electrode current collector.

As an example, the negative electrode active material may use well-known negative electrode active materials for battery cells in the art. As an example, the negative electrode active material may include at least one of the following materials: artificial graphite, natural graphite, soft carbon, hard carbon, silicon-based material, tin-based material, and lithium titanate. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the separator is an isolating film. The isolating film may use any well-known porous structure isolating film with good chemical stability and mechanical stability.

As an example, the material of the isolating film may include at least one of glass fiber, non-woven fabric, polyethylene, polypropylene, and polyvinylidene fluoride. The isolating film may be a single-layer film or a multilayer composite film. When the isolating film is a multilayer composite film, the materials of various layers may be the same or different. The separator may be an independent component located between the positive electrode and the negative electrode or may be attached to surfaces of the positive electrode and the negative electrode.

In some embodiments, the separator is a solid electrolyte. The solid electrolyte is disposed between the positive electrode and the negative electrode, playing the roles of transporting ions and isolating the positive electrode and the negative electrode.

In some embodiments, the battery cell further includes an electrolyte, where the electrolyte conducts ions between the positive and negative electrodes. The electrolyte may be liquid, gel, or solid. The liquid electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel electrolyte includes a polymer as a skeleton network of the electrolyte, paired with an ionic liquid-lithium salt.

The solid electrolyte includes a polymer solid electrolyte, an inorganic solid electrolyte, and a composite solid electrolyte.

As an example, the polymer solid electrolyte may be polyether (polyethylene oxide), polysiloxane, polycarbonate, polyacrylonitrile, polyvinylidene fluoride, polymethyl methacrylate, single-ion polymer, polyionic liquid-lithium salt, or cellulose.

As an example, the inorganic solid electrolyte may include one or more of oxide solid electrolytes (crystalline perovskite, sodium superionic conductor, garnet, and amorphous LiPON film), sulfide solid electrolytes (crystalline lithium superionic conductor (lithium germanium phosphorus sulfide and argyrodite) and amorphous sulfide), halide solid electrolytes, nitride solid electrolytes, and hydride solid electrolytes.

As an example, the composite solid electrolyte is formed by adding inorganic solid electrolyte fillers to the polymer solid electrolyte.

In some embodiments, the electrode assembly is a wound structure. The positive electrode plate and the negative electrode plate are wound into a wound structure.

In some embodiments, the electrode assembly is a laminated structure.

As an example, a plurality of positive electrode plates and a plurality of negative electrode plates may be respectively provided, with the plurality of positive electrode plates and the plurality of negative electrode plates alternately stacked.

As an example, a plurality of positive electrode plates may be provided, and the negative electrode plate may be folded to form a plurality of stacked folding segments, with one positive electrode plate sandwiched between adjacent folding segments.

As an example, both the positive electrode plate and the negative electrode plate are folded to form a plurality of stacked folding segments.

As an example, a plurality of separators may be provided, respectively disposed between any adjacent positive electrode plate or negative electrode plate.

As an example, the separator may be continuously disposed, arranged between any adjacent positive electrode plate or negative electrode plate by folding or winding.

In some embodiments, the shape of the electrode assembly may be cylindrical, flat, or prismatic.

In some embodiments, the electrode assembly is provided with tabs, where the tabs can conduct current from the electrode assembly. The tabs include a positive tab and a negative tab.

In some embodiments, the battery cell may include a housing. The housing is configured to encapsulate the electrode assembly, the electrolyte, and other components. The housing may be a steel housing, aluminum housing, plastic housing (for example, polypropylene), composite metal housing (for example, copper-aluminum composite housing), or aluminum-plastic film.

As an example, the battery cell may be a cylindrical battery cell, a prismatic battery cell, a pouch battery cell, or a battery cell of other shapes. The prismatic battery cell includes a square-shell battery cell, a blade-shaped battery cell, or a multi-prismatic battery cell, such as a hexagonal prismatic battery.

The battery mentioned in the embodiments of the present application refers to a single physical module including one or more battery cells to provide higher voltage and capacity.

In some embodiments, the battery may be a battery module, and when there are a plurality of battery cells, the plurality of battery cells are arranged and fastened to form a battery module.

In some embodiments, the battery may be a battery pack, the battery pack includes a box and battery cells, and the battery cells or battery modules are accommodated in the box.

In some embodiments, the box may be used as part of the chassis structure of a vehicle. For example, part of the box may become at least part of the chassis of a vehicle, or part of the box may become at least parts of a cross beam and longitudinal beam of a vehicle.

In some embodiments, the battery may be an energy storage apparatus. The energy storage apparatus includes an energy storage container, an energy storage electric cabinet, and the like.

The development of battery technology needs to consider multiple design factors simultaneously, such as energy density, cycle life, discharge capacity, charge-discharge rate, and other performance parameters, as well as the reliability of the battery cell.

In battery technology, a pressure relief component can be provided in the battery cell to improve the reliability of the battery cell. The pressure relief component on the battery cell has a significant impact on the reliability of the battery. For example, when a short circuit, overcharging, or the like occurs, thermal runaway may be caused inside the battery cell, resulting in a sudden rise in pressure or temperature. In such cases, the internal pressure and temperature can be released outward through the pressure relief component, reducing the probability of explosion or fire in the battery cell.

In the battery cell, an integrated pressure relief component integrally formed with a wall portion of the housing or a separate pressure relief component disposed separately from the wall portion of the housing may be used. For the separate pressure relief component, a pressure relief hole may be provided on the wall portion of the housing, and the pressure relief component may be fixed to the wall portion and cover the pressure relief hole. During thermal runaway of the battery cell, the internal pressure of the battery cell is released through the pressure relief component.

To reduce the impact of external components on the pressure relief component, a groove may be provided on the wall portion of the housing, with the pressure relief hole disposed on the groove bottom surface, and the pressure relief component accommodated within the groove and covering the pressure relief hole. After the pressure relief component is accommodated within the groove, the pressure relief component forms an interference fit with the groove side surface. During normal use of the battery cell, the battery cell may swell, causing deformation of the wall portion of the housing. The groove side surface will squeeze the pressure relief component, leading to deformation of the pressure relief component, which can easily cause premature damage and opening of the pressure relief component, affecting the service life of the battery cell.

In view of this, embodiments of the present application provide a battery cell. By forming a gap between at least a portion of the groove side surface along the circumferential direction of the groove and the pressure relief component, when the first wall portion deforms due to swelling of the battery cell, the gap between the pressure relief component and the groove side surface provides a buffer space for the pressure relief component, reducing the risk of the groove side surface squeezing the pressure relief component and causing deformation of the pressure relief component, thereby reducing the risk of the pressure relief component opening prematurely during normal use of the battery cell, improving the service life of the pressure relief component, and further improving the service life of the battery cell.

The battery cell described in the embodiments of the present application is suitable for batteries and electric apparatuses using battery cells.

The electric apparatus may be a vehicle, a mobile phone, a portable device, a notebook computer, a ship, a spacecraft, an electric toy, an electric tool, or the like. The vehicle may be a fuel vehicle, a gas vehicle, or a new energy vehicle, where the new energy vehicle may be a pure electric vehicle, a hybrid vehicle, or an extended-range vehicle; spacecraft include airplanes, rockets, space shuttles, and spaceships; electric toys include fixed or mobile electric toys, such as game consoles, electric car toys, electric ship toys, and electric airplane toys; electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers. The embodiments of the present application impose no special limitation on the foregoing electric apparatus.

For convenience of explanation, the following embodiments take the electric apparatus as a vehicle as an example.

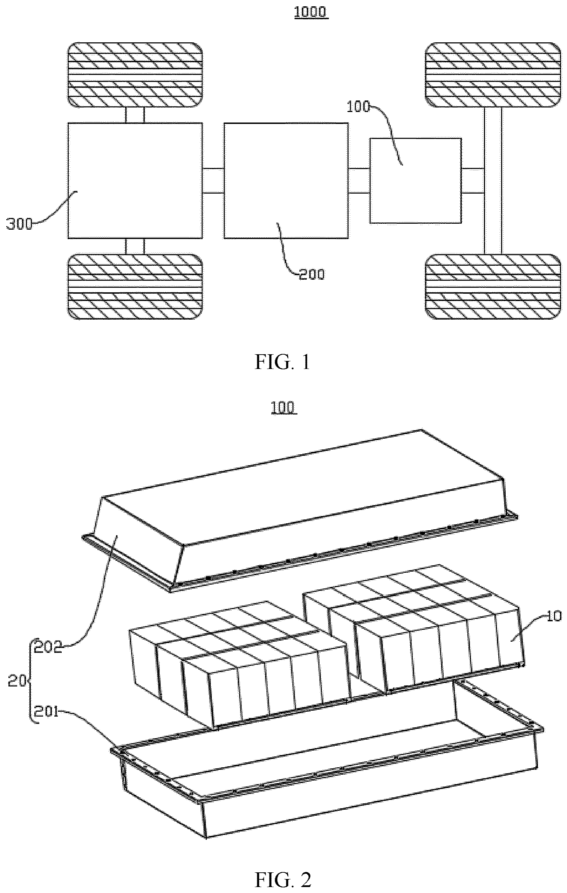

Referring to FIG. 1, FIG. 1 is a schematic structural diagram of a vehicle 1000 according to some embodiments of the present application. A battery 100 is disposed inside the vehicle 1000, and the battery 100 may be disposed at the bottom, head, or tail of the vehicle 1000. The battery 100 may be configured to supply power to the vehicle 1000. For example, the battery 100 may be used as an operational power supply for the vehicle 1000.

The vehicle 1000 may further include a controller 200 and a motor 300, where the controller 200 is used to control the battery 100 to supply power to the motor 300, for example, for the working power requirements during starting, navigation, and driving of the vehicle 1000.

In some embodiments of the present application, the battery 100 may not only serve as an operational power supply for the vehicle 1000 but also as a driving power supply for the vehicle 1000, replacing or partially replacing fuel or natural gas to provide driving power for the vehicle 1000.

Referring to FIG. 2, FIG. 2 is an exploded view of a battery 100 according to some embodiments of the present application. The battery 100 includes a battery cell 10 and a box 20, with the battery cell 10 accommodated within the box 20.

The box 20 is a component for accommodating the battery cell 10, providing an accommodation space for the battery cell 10, and the box 20 may adopt various structures. In some embodiments, the box 20 may include a first portion 201 and a second portion 202, where the first portion 201 and the second portion 202 cover each other to define an accommodation space for accommodating the battery cell 10. The first portion 201 and the second portion 202 may be of various shapes, such as cuboid or cylindrical. The first portion 201 may be a hollow structure with one side open, and the second portion 202 may also be a hollow structure with one side open, where the open side of the second portion 202 engages with the open side of the first portion 201 to form a box 20 with an accommodation space. Alternatively, the first portion 201 may be a hollow structure with one side open, and the second portion 202 may be a plate structure, where the second portion 202 covers the open side of the first portion 201 to form a box 20 with an accommodation space. The first portion 201 and the second portion 202 may be sealed by a sealing element, which may be a sealing ring, sealing adhesive, or the like.

There may be one or more battery cells 10 in the battery 100. If there are a plurality of battery cells 10, the plurality of battery cells 10 may be connected in series, in parallel, or in a mixed configuration, where a mixed configuration means that the plurality of battery cells 10 includes both series and parallel connections. A plurality of battery cells 10 may first be connected in series, in parallel, or in a mixed configuration to form a battery module, and then a plurality of battery modules may be connected in series, in parallel, or in a mixed configuration to form an entirety accommodated within the box 20. Alternatively, all battery cells 10 may be directly connected in series, in parallel, or in a mixed configuration, and the entirety formed by all battery cells 10 is accommodated within the box 20.

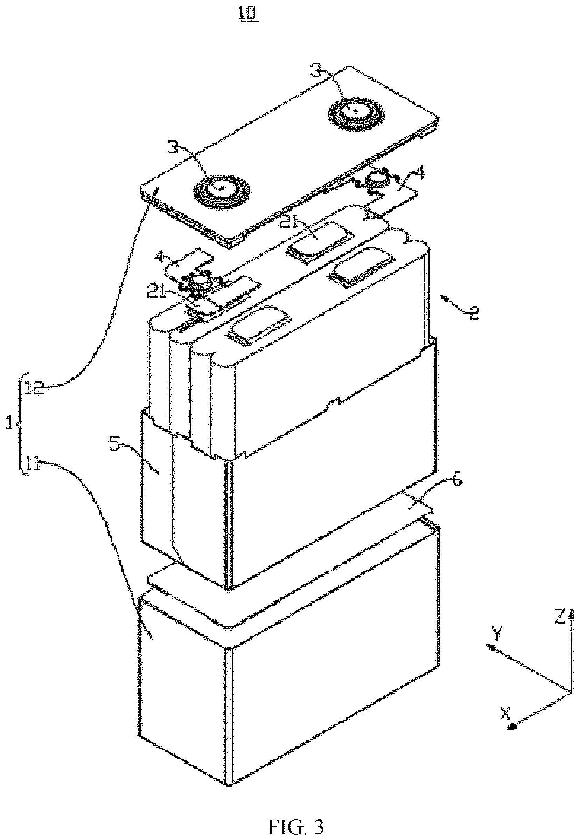

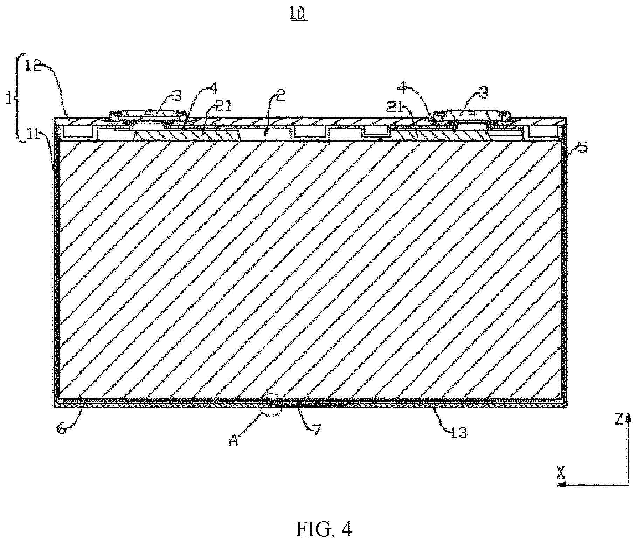

Referring to FIG. 3 and FIG. 4, FIG. 3 is an exploded view of a battery cell 10 according to some embodiments of the present application, and FIG. 4 is a cross-sectional view of a battery cell 10 according to some embodiments of the present application. The battery cell 10 may include a housing 1 and an electrode assembly 2, with the electrode assembly 2 accommodated within the housing 1.

In some embodiments, the housing 1 may include a shell 11 and an end cap 12, where the shell 11 has an opening, and the end cap 12 closes the opening of the shell 11.

The shell 11 is a component for accommodating the electrode assembly 2, and the shell 11 may be a hollow structure with an opening formed at one end or a hollow structure with openings formed at opposite ends. The shell 11 may be of various shapes, such as cylindrical or cuboid. The material of the shell 11 may be various, such as copper, iron, aluminum, steel, or aluminum alloy.

The end cap 12 is a component that closes the opening of the shell 11 to isolate the internal environment of the battery cell 10 from the external environment. The end cap 12 and the shell 11 together define a containment space for accommodating the electrode assembly 2, electrolyte, and other components. The end cap 12 may be connected to the shell 11 by welding or crimping to close the opening of the shell 11. The shape of the end cap 12 may be adapted to the shape of the housing 1. For example, if the shell 11 is a cuboid structure, the end cap 12 is a rectangular plate structure adapted to the housing 1; if the shell 11 is a cylindrical structure, the end cap 12 is a circular plate structure adapted to the shell 11. The material of the end cap 12 may also be various, such as copper, iron, aluminum, steel, aluminum alloy, or plastic, and the material of the end cap 12 may be the same as or different from that of the shell 11.

In an embodiment where the shell 11 has an opening formed at one end, one end cap 12 may be correspondingly provided. In an embodiment where the shell 11 has openings formed at opposite ends, two end caps 12 may be correspondingly provided, with the two end caps 12 respectively closing the two openings of the shell 11, and the two end caps 12 and the shell 11 together defining a containment space.

In some embodiments, the battery cell 10 may further include electrode terminals 3, where the electrode terminals 3 are disposed on the housing 1, and the electrode terminals 3 are used to electrically connect with tabs 21 of the electrode assembly 2 to input or output electrical energy of the battery cell 10. The electrode terminals 3 may be disposed on the shell 11 of the housing 1 or on the end cap 12 of the housing 1. The electrode terminals 3 and the tabs 21 may be directly connected, for example, by directly welding the electrode terminals 3 to the tabs 21. The electrode terminals 3 and the tabs 21 may also be indirectly connected, for example, through a current collecting member 4. The current collecting member 4 may be a metal conductor, such as copper, iron, aluminum, steel, or aluminum alloy.

As an example, as shown in FIG. 3 and FIG. 4, the shell 11 is a hollow structure with an opening formed at one end, the housing 1 includes one end cap 12, and one end cap 12 closes one opening of the shell 11. The end cap 12 is provided with two electrode terminals 3, where the two electrode terminals 3 are a positive electrode terminal and a negative electrode terminal, respectively. One end of the electrode assembly 2 facing the end cap 12 is formed with a positive tab and a negative tab, the positive electrode terminal is connected to the positive tab through one current collecting member 4, and the negative electrode terminal is connected to the negative tab through another current collecting member 4.

In some embodiments, continuing to refer to FIG. 3 and FIG. 4, the battery cell 10 may further include a first insulating member 5 and a second insulating member 6, where the first insulating member 5 and the second insulating member 6 are components that separate the shell 11 from the electrode assembly 2. The first insulating member 5 wraps around the electrode assembly 2, and the second insulating member 6 is disposed on a side of the electrode assembly 2 facing away from the end cap 12. The first insulating member 5 and the second insulating member 6 achieve insulation isolation between the shell 11 and the electrode assembly 2. The first insulating member 5 and the second insulating member 6 are made of insulating materials, such as plastic or rubber.

It should be noted that the electrode assembly 2 within the housing 1 may be one or more. If there is one electrode assembly 2, the first insulating member 5 wraps around this electrode assembly 2; if there are multiple electrode assemblies 2, each electrode assembly 2 may correspond to one first insulating member 5, with each first insulating member 5 wrapping around one electrode assembly 2, or multiple electrode assemblies 2 may be treated as a whole component, with the first insulating member 5 wrapping around the entirety of this component.

As an example, as shown in FIG. 3 and FIG. 4, there are two electrode assemblies 2 within the housing 1, the first insulating member 5 is an insulating film wrapping around the two electrode assemblies 2, and the second insulating member 6 is a bottom support plate disposed at the bottom of the two electrode assemblies 2.

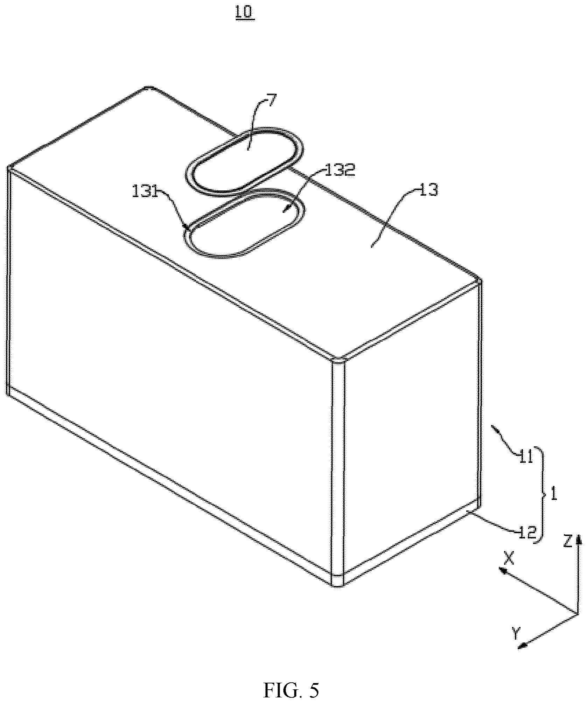

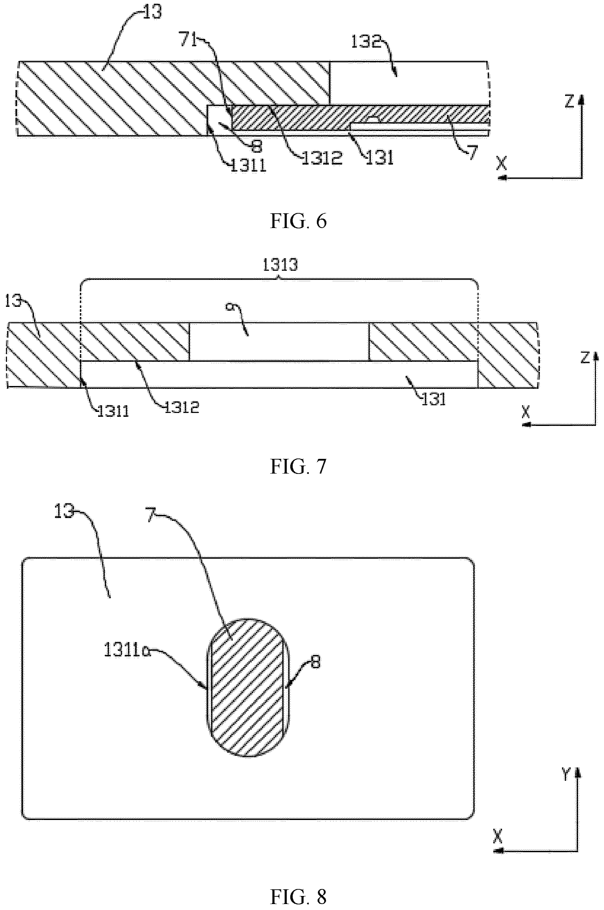

Referring to FIG. 5 to FIG. 7, FIG. 5 is an isometric view of the battery cell 10 shown in FIG. 4 (with the pressure relief component 7 separated from the first wall portion 13); FIG. 6 is a partial view of the pressure relief component 7 and the first wall portion 13 shown in FIG. 5 after assembly; and FIG. 7 is a partial view of the first wall portion 13 shown in FIG. 6. An embodiment of the present application provides a battery cell 10 including a housing 1 and a pressure relief component 7. The housing 1 includes a first wall portion 13, the first wall portion 13 is provided with a first groove 131, the first groove 131 includes a groove side surface 1311 and a first groove bottom surface 1312, the groove side surface 1311 surrounds the first groove bottom surface 1312, and the first groove bottom surface 1312 is provided with a pressure relief hole 132. The pressure relief component 7 is disposed within the first groove 131, and the pressure relief component 7 abuts against the first groove bottom surface 1312 and covers the pressure relief hole 132. At least a portion of the groove side surface 1311 along a circumferential direction of the first groove 131 forms a gap 8 with the pressure relief component 7.

The pressure relief component 7 is a component for releasing internal pressure of the battery cell 10. When the internal pressure of the battery cell 10 reaches a threshold, the pressure relief component 7 discharges the emission medium inside the battery cell 10 to achieve pressure relief. The emission medium includes, but is not limited to, electrolyte, dissolved or fragmented positive and negative electrode plates, fragments of the separator, reaction-generated gases, flames, and the like. The pressure relief component 7 may be a sheet-like component disposed on the housing 1, and the pressure relief component 7 may be disposed on the shell 11 of the housing 1 or on the end cap 12 of the housing 1.

The first wall portion 13 may be the end cap 12 of the housing 1, meaning that the pressure relief component 7 is disposed on the end cap 12; and the first wall portion 13 may also be at least one wall portion of the shell 11 of the housing 1, meaning that the pressure relief component 7 is disposed on the shell 11. The first wall portion 13 may be a circular wall portion, a polygonal wall portion, or the like. The polygonal wall portion may be a triangular wall portion, a quadrilateral wall portion, a pentagonal wall portion, a hexagonal wall portion, or the like. In some embodiments, the housing 1 is cylindrical, and the first wall portion 13 is a circular wall portion; and in other embodiments, the housing 1 is cuboidal, and the first wall portion 13 is a rectangular wall portion. The pressure relief component 7 may be fixed to the first wall portion 13, and the pressure relief component 7 may be connected to the first wall portion 13 in various ways, such as welding or bonding.

The first groove 131 may be formed on the first wall portion 13 in various ways, such as stamping, milling, or laser etching. The groove side surface 1311 is a closed structure extending along the circumferential direction of the first groove 131. Along a depth direction of the first groove 131, an opening of the first groove 131 is disposed opposite to the first groove bottom surface 1312, and the depth direction of the first groove 131 may be parallel to a thickness direction Z of the first wall portion 13. The first groove 131 may be a polygonal groove, a circular groove, or the like. If the first groove 131 is a polygonal groove, a cross-section of the groove side surface 1311 is polygonal, and the first groove bottom surface 1312 may be polygonal; and if the first groove 131 is circular, a cross-section of the groove side surface 1311 is circular, and the first groove bottom surface 1312 may be circular. The cross-section of the groove side surface 1311 is perpendicular to the depth direction of the first groove 131. The groove side surface 1311 may include multiple side surfaces, with the multiple side surfaces sequentially connected end-to-end along the circumferential direction of the first groove 131. The side surface may be a surface parallel to the thickness direction Z of the first wall portion 13, and the side surface may be perpendicular to the first groove bottom surface 1312; and the side surface may also be an inclined surface disposed at an obtuse angle with respect to the first groove bottom surface 1312. The side surface may be a flat surface or an arc surface. If the side surface is an arc surface, the side surface may be an arc surface with a centerline parallel to the thickness direction Z of the first wall portion 13 or an arc surface with a centerline perpendicular to the thickness direction Z of the first wall portion 13.

The pressure relief component 7 is disposed within the groove, and the pressure relief component 7 may be entirely located within the first groove 131 or partially located within the first groove 131 and partially located outside the first groove 131. The pressure relief component 7 may directly contact the first groove bottom surface 1312, achieving direct abutment of the pressure relief component 7 against the first groove bottom surface 1312; and the pressure relief component 7 may also indirectly abut against the first groove bottom surface 1312 through an intermediate piece. For example, the pressure relief component 7 is welded to a groove bottom wall 1313 of the first groove 131, making the pressure relief component 7 contact the first groove bottom surface 1312, and the pressure relief component 7 directly abuts against the first groove bottom surface 1312; as another example, the pressure relief component 7 is bonded to the groove bottom wall 1313 of the first groove 131 through an adhesive layer, and the pressure relief component 7 indirectly abuts against the first groove bottom surface 1312 through the adhesive layer.

The pressure relief component 7 covers the pressure relief hole 132, and the pressure relief component 7 shields the pressure relief hole 132. Along the thickness direction Z of the first wall portion 13, a projection of a hole wall surface of the pressure relief hole 132 may be entirely located within the pressure relief component 7. The pressure relief component 7 may be located on a side of the pressure relief hole 132 facing the interior of the housing 1 along the thickness direction Z of the first wall portion 13 or on a side of the pressure relief hole 132 facing away from the interior of the housing 1 along the thickness direction Z of the first wall portion 13. If the pressure relief component 7 is located on the side of the pressure relief hole 132 facing the interior of the housing 1 along the thickness direction Z of the first wall portion 13, the pressure relief component 7 separates the pressure relief hole 132 from the internal space of the housing 1. During thermal runaway of the battery cell 10, the pressure relief component 7 is damaged, the pressure relief hole 132 communicates with the internal space of the housing 1, and the emission medium inside the housing 1 can be discharged through the pressure relief hole 132. If the pressure relief component 7 is located on the side of the pressure relief hole 132 facing away from the interior of the housing 1 along the thickness direction Z of the first wall portion 13, the pressure relief hole 132 communicates with the internal space of the housing 1, and the pressure relief component 7 separates the pressure relief hole 132 from the external space of the housing 1. During thermal runaway of the battery cell 10, the pressure relief component 7 is damaged, the pressure relief hole 132 connects the internal space of the housing 1 with the external space of the housing 1, and the emission medium inside the housing 1 can be discharged through the pressure relief hole 132.

The circumferential direction of the first groove 131 surrounds the depth direction of the first groove 131, and the circumferential direction of the opening of the first groove 131 is the circumferential direction of the first groove 131. A portion of the groove side surface 1311 along the circumferential direction of the first groove 131 may form a gap 8 with the pressure relief component 7, or the entire groove side surface 1311 along the circumferential direction of the first groove 131 may form a gap 8 with the pressure relief component 7. The pressure relief component 7 has an outer peripheral surface 71 facing the groove side surface 1311, and the outer peripheral surface 71 is a closed structure extending along the circumferential direction of the pressure relief component 7. If a portion of the groove side surface 1311 along the circumferential direction of the first groove 131 forms a gap 8 with the outer peripheral surface 71 of the pressure relief component 7, and another portion of the groove side surface 1311 along the circumferential direction of the first groove 131 does not form a gap 8 with the outer peripheral surface 71 of the pressure relief component 7, then a portion of the groove side surface 1311 along the circumferential direction of the first groove 131 forms a gap 8 with the pressure relief component 7, where the gap 8 is a non-closed structure extending along the circumferential direction of the first groove 131. If the entire groove side surface 1311 along the circumferential direction of the first groove 131 forms a gap 8 with the outer peripheral surface 71 of the pressure relief component 7, then the entire groove side surface 1311 along the circumferential direction of the first groove 131 forms a gap 8 with the pressure relief component 7, where the gap 8 is a closed structure extending along the circumferential direction of the first groove 131, that is, the gap 8 is an annular gap.

In this embodiment, at least a portion of the groove side surface 1311 along the circumferential direction of the first groove 131 forms a gap 8 with the pressure relief component 7. When the first wall portion 13 deforms due to swelling of the battery cell 10, the gap 8 between the pressure relief component 7 and the groove side surface 1311 provides a buffer space for the pressure relief component 7, reducing the risk of the groove side surface 1311 squeezing the pressure relief component 7 and causing deformation of the pressure relief component 7, thereby reducing the risk of the pressure relief component 7 opening prematurely during normal use of the battery cell 10, improving the service life of the pressure relief component 7, and further improving the service life of the battery cell 10.

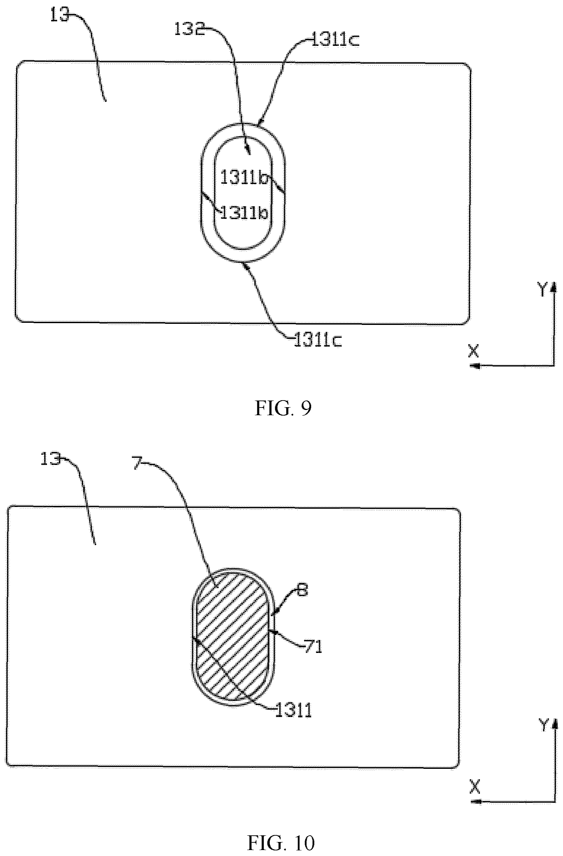

In some embodiments, referring to FIG. 8 and FIG. 9, FIG. 8 is a top view of the pressure relief component 7 and the first wall portion 13 assembled according to some embodiments of the present application; FIG. 9 is a top view of the first wall portion 13 shown in FIG. 8. The groove side surface 1311 (shown in FIG. 7) includes a first region 1311a forming a gap 8 with the pressure relief component 7. Along the circumferential direction of the first groove 131, a length of the first region 1311a is denoted as L₁, and a perimeter of the groove side surface 1311 is denoted as L, satisfying: 0.2 ≤ L₁/L ≤ 1.

The length of the first region 1311a is the total length of the portion of the groove side surface 1311 along the circumferential direction of the first groove 131 that forms a gap 8 with the pressure relief component 7. When measuring the length of the first region 1311a and the perimeter of the groove side surface 1311, measurements may be taken along an edge of the groove side surface 1311 at the opening position of the first groove 131.

L₁/L may be a point value of any one of 0.2, 0.3, 0.4, 0.5, 0.6, 0.7, 0.8, 0.9, and 1, or a range value between any two of them.

As an example, as shown in FIG. 8 and FIG. 9, the groove side surface 1311 includes two second side surfaces 1311b and two third side surfaces 1311c, the first wall portion 13 is a rectangular wall portion, the two second side surfaces 1311b are oppositely disposed along a length direction X of the first wall portion 13, the two third side surfaces 1311c are oppositely disposed along a width direction Y of the first wall portion 13, and one second side surface 1311b, one third side surface 1311c, another second side surface 1311b, and another third side surface 1311c are sequentially connected end-to-end to form a closed structure. The second side surface 1311b extends along the width direction Y of the first wall portion 13, the third side surface 1311c is an arc surface, a gap 8 is formed between the two second side surfaces 1311b and the pressure relief component 7, and only a portion of each third side surface 1311c forms a gap 8 with the pressure relief component 7. It can be understood that the portions of the two third side surfaces 1311c forming a gap 8 with the pressure relief component 7 and the two second side surfaces 1311b constitute the first region 1311a. Along the circumferential direction of the first groove 131, the total length of the portions of the two third side surfaces 1311c forming a gap 8 with the pressure relief component 7 and the two second side surfaces 1311b is the length of the first region 1311a, and the total length of the two second side surfaces 1311b and the two third side surfaces 1311c is the perimeter of the groove side surface 1311.

In this embodiment, 0.2 ≤ L₁/L ≤ 1 ensures that a relatively long portion of the groove side surface 1311 along the circumferential direction forms a gap 8 with the pressure relief component 7, reducing the extent of squeezing of the pressure relief component 7 by the groove side surface 1311 when the first wall portion 13 deforms, further reducing the risk of the pressure relief component 7 opening prematurely during normal use of the battery cell 10.

In some embodiments, 0.5 ≤ L₁/L ≤ 1.

In this embodiment, L₁/L may be a point value of any one of 0.5, 0.53, 0.55, 0.58, 0.6, 0.63, 0.65, 0.68, 0.7, 0.73, 0.75, 0.78, 0.8, 0.83, 0.85, 0.88, 0.9, 0.93, 0.95, 0.98, and 1, or a range value between any two of them.

In some embodiments, referring to FIG. 10, FIG. 10 is a top view of the pressure relief component 7 and the first wall portion 13 assembled according to some other embodiments of the present application. The entire groove side surface 1311 along the circumferential direction of the first groove 131 forms a gap 8 with the pressure relief component 7.

It can be understood that the gap 8 formed between the groove side surface 1311 and the outer peripheral surface 71 of the pressure relief component 7 is an annular gap extending along the circumferential direction of the first groove 131. In this embodiment, the first region 1311a is the groove side surface 1311, and L₁/L = 1.

In this embodiment, the entire circumference of the groove side surface 1311 forms a gap 8 with the pressure relief component 7, and the gap 8 is an annular structure surrounding the pressure relief component 7, further reducing the squeezing effect of the groove side surface 1311 on the pressure relief component 7 when the first wall portion 13 deforms, further reducing the risk of the pressure relief component 7 opening prematurely during normal use of the battery cell 10.

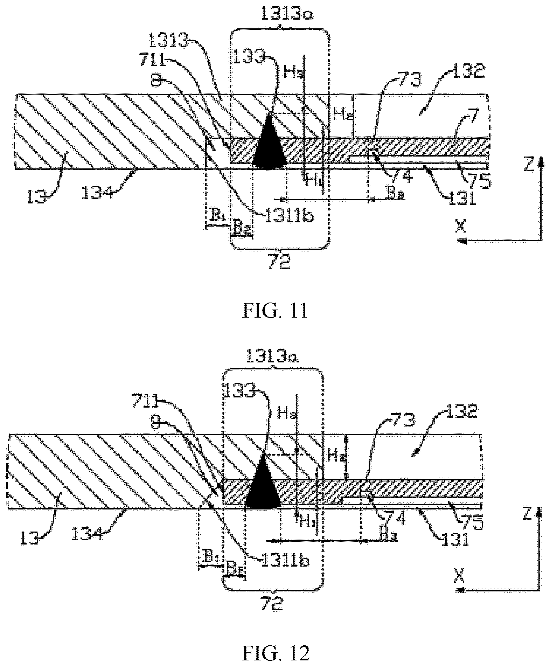

In some embodiments, referring to FIG. 11, FIG. 11 is a partial view of the pressure relief component 7 and the first wall portion 13 assembled according to some embodiments of the present application. The pressure relief component 7 is welded to a groove bottom wall 1313 of the first groove 131, forming a weld mark portion 133.

The groove bottom wall 1313 of the first groove 131 is a solid portion with thickness located below the first groove bottom surface 1312 along the depth direction of the first groove 131 for the pressure relief component 7. The weld mark portion 133 is a weld mark formed by welding the pressure relief component 7 to the groove bottom wall 1313, and the weld mark portion 133 may be formed by melting a portion of the pressure relief component 7 and a portion of the groove bottom wall 1313 together. The weld mark portion 133 may be an annular structure extending along the circumferential direction of the pressure relief component 7, a multi-segment structure arranged at intervals along the circumferential direction of the pressure relief component 7, or a strip-like structure extending along a linear trajectory.

In this embodiment, the pressure relief component 7 is welded to the groove bottom wall 1313, securing the pressure relief component 7 to the first wall portion 13, enhancing the connection strength between the pressure relief component 7 and the first wall portion 13.

In some embodiments, continuing to refer to FIG. 11, along a thickness direction Z of the first wall portion 13, a projection of the weld mark portion 133 is entirely located within the pressure relief component 7.

When observed along the thickness direction Z of the first wall portion 13, the weld mark portion 133 is entirely located within a region defined by an outer edge of the pressure relief component 7, and the weld mark portion 133 does not have any portion located outside the region defined by the outer edge of the pressure relief component 7. The weld mark portion 133 has a portion located in the pressure relief component 7 and a portion located in the groove bottom wall 1313.

In this embodiment, the pressure relief component 7 can be welded to the groove bottom wall 1313 of the first groove 131 through penetration welding, which is a simple welding method. The weld mark portion 133 formed after welding can pass through the pressure relief component 7 and embed into the groove bottom wall 1313 of the first groove 131, enhancing the connection strength between the pressure relief component 7 and the first wall portion 13. Additionally, since the projection of the weld mark portion 133 along the thickness direction Z of the first wall portion 13 is located within the pressure relief component 7, the weld mark portion 133 does not protrude beyond the edge of the pressure relief component 7, ensuring that the weld mark portion 133 is not located within the gap 8 between the pressure relief component 7 and the groove side surface 1311, reducing the risk of the groove side surface 1311 squeezing the pressure relief component 7 via the weld mark portion 133 when the first wall portion 13 deforms.

In some embodiments, continuing to refer to FIG. 11, the pressure relief component 7 and the groove bottom wall 1313 have an overlapping region, the pressure relief component 7 includes a first welding region 72 located in the pressure relief component 7 and a second welding region 1313a located in the groove bottom wall 1313, the second welding region 1313a defines the pressure relief hole 132, and the first welding region 72 and the second welding region 1313a are welded together, forming the weld mark portion 133. Along the thickness direction Z of the first wall portion 13, a minimum thickness of the first welding region 72 is denoted as H₁, a minimum thickness of the second welding region 1313a is denoted as H₂, a maximum height of the weld mark portion 133 is denoted as H₃, satisfying: H₁ < H₃ ≤ H₁ + H₂.

The overlapping region is a portion where the pressure relief component 7 and the groove bottom wall 1313 overlap along the thickness direction Z of the first wall portion 13. The first welding region 72 is a portion of the pressure relief component 7 overlapping with the groove bottom wall 1313 along the thickness direction Z of the first wall portion 13. The second welding region 1313a is a portion of the groove bottom wall 1313 overlapping with the pressure relief component 7 along the thickness direction Z of the first wall portion 13, and the groove bottom wall 1313 may be the second welding region 1313a, or a portion of the groove bottom wall 1313 may be the second welding region 1313a. It can be understood that, when observed along the thickness direction Z of the first wall portion 13, the first welding region 72 overlaps with the second welding region 1313a.

Along the thickness direction Z of the first wall portion 13, the thickness of the thinnest position of the first welding region 72 is the minimum thickness of the first welding region 72. If the thickness of the first welding region 72 is uniform, the thickness of any region of the first welding region 72 is the minimum thickness of the first welding region 72. Along the thickness direction Z of the first wall portion 13, the thickness of the thinnest position of the second welding region 1313a is the minimum thickness of the second welding region 1313a. If the thickness of the second welding region 1313a is uniform, the thickness of any region of the second welding region 1313a is the minimum thickness of the second welding region 1313a. The maximum height of the weld mark portion 133 is the maximum dimension of the weld mark portion 133 in the thickness direction Z of the first wall portion 13.

In this embodiment, H₃ > H₁ ensures that a portion of the weld mark portion 133 can embed into the second welding region 1313a, achieving a stable connection between the pressure relief component 7 and the groove bottom wall 1313; and H₃ ≤ H₁ + H₂ ensures that the weld mark portion 133 does not completely penetrate the second welding region 1313a, reducing the risk of the second welding region 1313a being welded through.

In some embodiments, 0.2 mm ≤ H₁ ≤ 1 mm.

In this embodiment, H₁ may be a point value of any one of 0.2 mm, 0.3 mm, 0.4 mm, 0.5 mm, 0.6 mm, 0.7 mm, 0.8 mm, 0.9 mm, and 1 mm, or a range value between any two of them.

In this embodiment, H₁ ≥ 0.2 mm ensures that the first welding region 72 has sufficient thickness, providing sufficient strength to the first welding region 72; and H₁ ≤ 1 mm ensures that the thickness of the first welding region 72 is not excessively large, facilitating reduced welding power and improved welding effects.

In some embodiments, 0.45 mm ≤ H₁ ≤ 0.75 mm.

In this embodiment, H₁ may be a point value of any one of 0.45 mm, 0.48 mm, 0.5 mm, 0.53 mm, 0.55 mm, 0.58 mm, 0.6 mm, 0.63 mm, 0.65 mm, 0.68 mm, 0.7 mm, 0.73 mm, and 0.75 mm, or a range value between any two of them.

In some embodiments, 0.2 mm ≤ H₂ ≤ 5 mm.

In this embodiment, H₂ may be a point value of any one of 0.2 mm, 0.5 mm, 1 mm, 1.5 mm, 2 mm, 2.5 mm, 3 mm, 3.5 mm, 4 mm, 4.5 mm, and 5 mm, or a range value between any two of them.

In this embodiment, H₂ ≥ 0.2 mm ensures that the second welding region 1313a has sufficient thickness, reducing the risk of the second welding region 1313a being welded through; and H₂ ≤ 5 mm ensures that the thickness of the second welding region 1313a is not excessively large, saving material and providing better economic efficiency.

In some embodiments, 0.8 mm ≤ H₂ ≤ 3 mm.

In this embodiment, H₂ may be a point value of any one of 0.8 mm, 1 mm, 1.3 mm, 1.5 mm, 1.8 mm, 2 mm, 2.3 mm, 2.5 mm, 2.8 mm, and 3 mm, or a range value between any two of them.

In some embodiments, continuing to refer to FIG. 11, along a first direction, at least one end of the pressure relief component 7 forms a first side surface 711, the groove side surface 1311 includes a second side surface 1311b facing the first side surface 711, a gap 8 is formed between the first side surface 711 and the second side surface 1311b, and the first direction intersects with the thickness direction Z of the first wall portion 13.

The first direction may be perpendicular to the thickness direction Z of the first wall portion 13 or may form an acute or obtuse angle with it. If the first wall portion 13 is a circular wall portion, the first direction may be parallel to a radial direction of the first wall portion 13; and if the first wall portion 13 is a polygonal wall portion, taking a rectangular wall portion as an example, the first direction may be parallel to a length direction X of the first wall portion 13 or parallel to a width direction Y of the first wall portion 13. In the embodiment shown in FIG. 11, the first wall portion 13 is a rectangular wall portion, the first direction is parallel to the length direction X of the first wall portion 13, and the first direction is perpendicular to the thickness direction Z of the first wall portion 13.

The first side surface 711 is an end face of the pressure relief component 7 along the first direction, and the first side surface 711 is a portion of the outer peripheral surface 71 (shown in FIG. 10) of the pressure relief component 7. The outer peripheral surface 71 may include one or two first side surfaces 711. The second side surface 1311b is a portion of the groove side surface 1311, and the second side surface 1311b corresponds one-to-one with the first side surface 711. The groove side surface 1311 may include one or two second side surfaces 1311b. As an example, along the first direction, two ends of the pressure relief component 7 each form a first side surface 711, the groove side surface 1311 includes two second side surfaces 1311b, a gap 8 is formed between one first side surface 711 and one second side surface 1311b, and a gap 8 is also formed between the other first side surface 711 and the other second side surface 1311b.

The first side surface 711 may be parallel to the thickness direction Z of the first wall portion 13 or may be disposed at a non-zero angle with respect to the thickness direction Z of the first wall portion 13. The first side surface 711 may be a flat surface or a non-flat surface, such as an arc surface. If the first side surface 711 is an arc surface, the centerline of the first side surface 711 may be parallel to or perpendicular to the thickness direction Z of the first wall portion 13. The second side surface 1311b may be parallel to the thickness direction Z of the first wall portion 13 or may be disposed at a non-zero angle with respect to the thickness direction Z of the first wall portion 13. The second side surface 1311b may be a flat surface or a non-flat surface, such as an arc surface. If the second side surface 1311b is an arc surface, the centerline of the second side surface 1311b may be parallel to or perpendicular to the thickness direction Z of the first wall portion 13.

In this embodiment, since a gap 8 is formed between the first side surface 711 and the second side surface 1311b, when the first wall portion 13 deforms, the second side surface 1311b is less likely to squeeze the first side surface 711 along the first direction, reducing the risk of deformation of the pressure relief component 7 due to squeezing forces in the first direction.

In some embodiments, continuing to refer to FIG. 11, the first side surface 711 is parallel to the second side surface 1311b.

As an example, both the first side surface 711 and the second side surface 1311b are flat surfaces.

As an example, the groove side surface 1311 includes two second side surfaces 1311b and two third side surfaces 1311c (shown in FIG. 9). One second side surface 1311b, one third side surface 1311c, another second side surface 1311b, and another third side surface 1311c are sequentially connected end-to-end to form a closed structure. A side surface of the pressure relief component 7 facing the third side surface 1311c is parallel to the third side surface 1311c, the third side surface 1311c is an arc surface, and a centerline of the third side surface 1311c is parallel to the thickness direction Z of the first wall portion 13.

In this embodiment, the first side surface 711 being parallel to the second side surface 1311b ensures that the distance between the first side surface 711 and the second side surface 1311b does not significantly change along a depth direction of the first groove 131, making it difficult for the second side surface 1311b to squeeze the first side surface 711 along the first direction.

In some embodiments, continuing to refer to FIG. 11, the second side surface 1311b is parallel to the thickness direction Z of the first wall portion 13.

As an example, both the second side surface 1311b and the first groove bottom surface 1312 are flat surfaces, and the second side surface 1311b is perpendicular to the first groove bottom surface 1312 (shown in FIG. 7).

In this embodiment, the second side surface 1311b being parallel to the thickness direction Z of the first wall portion 13 simplifies the structure of the first wall portion 13, facilitating reduced forming difficulty of the first groove 131.

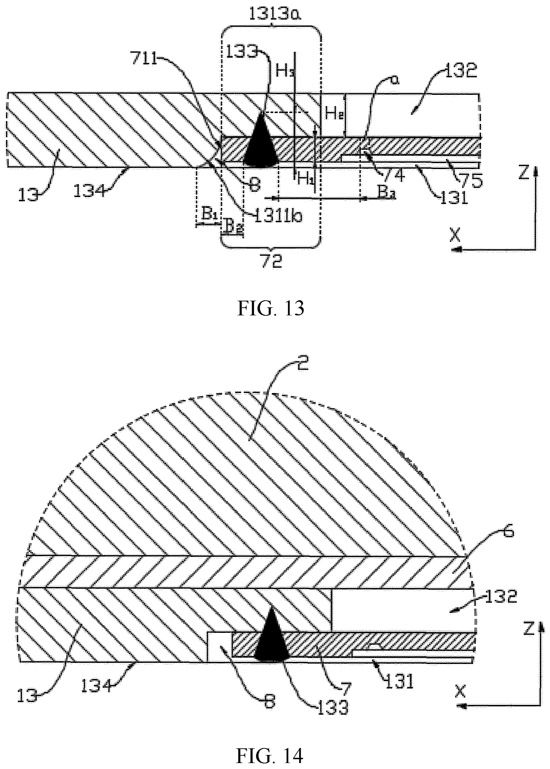

In some embodiments, referring to FIG. 12 and FIG. 13, FIG. 12 is a partial view of the pressure relief component 7 and the first wall portion 13 assembled according to some other embodiments of the present application; FIG. 13 is a partial view of the pressure relief component 7 and the first wall portion 13 assembled according to some further embodiments of the present application. A distance between the first side surface 711 and the second side surface 1311b along the first direction gradually decreases along a depth direction of the first groove 131.

The depth direction of the first groove 131 is a direction from an opening of the first groove 131 toward the first groove bottom surface 1312 of the first groove 131, and the depth direction of the first groove 131 may be parallel to the thickness direction Z of the first wall portion 13.

It can be understood that the gap 8 formed between the first side surface 711 and the second side surface 1311b in the first direction gradually decreases along the depth direction of the first groove 131, and the distance at the narrowest position between the first side surface 711 and the second side surface 1311b may be zero or greater than zero.

When the first wall portion 13 deforms, the portion of the second side surface 1311b closer to the first groove bottom surface 1312 has a smaller deformation amount, exerting less squeezing force on the first side surface 711, while the portion of the second side surface 1311b closer to the opening of the first groove 131 has a larger deformation amount, exerting greater squeezing force on the first side surface 711. Gradually reducing the distance between the first side surface 711 and the second side surface 1311b along the first direction along the depth direction of the first groove 131 can reduce the squeezing effect of the second side surface 1311b on the first side surface 711 when the first wall portion 13 deforms, and can also reduce the movement range of the pressure relief component 7 along the first direction within the first groove 131 during installation, reducing the installation difficulty of the pressure relief component 7 and improving the installation accuracy of the pressure relief component 7.

In some embodiments, referring to FIG. 12, the second side surface 1311b is an inclined surface disposed at a non-zero angle with respect to the thickness direction Z of the first wall portion 13.

The angle between the second side surface 1311b and the thickness direction Z of the first wall portion 13 is denoted as a, where 0° < a ≤ 90°.

As an example, the first groove bottom surface 1312 is a flat surface, the second side surface 1311b is disposed at an obtuse angle with respect to the first groove bottom surface 1312 (shown in FIG. 7), and a gap 8 along the first direction between a connection position of the first side surface 711 and the first groove bottom surface 1312 and the second side surface 1311b is minimal.

As an example, the groove side surface 1311 (shown in FIG. 7) includes two second side surfaces 1311b and two third side surfaces 1311c (shown in FIG. 9). One second side surface 1311b, one third side surface 1311c, another second side surface 1311b, and another third side surface 1311c are sequentially connected end-to-end to form a closed structure. The third side surface 1311c is disposed at a non-zero angle with respect to the thickness direction Z of the first wall portion 13, the third side surface 1311c is disposed at an obtuse angle with respect to the first groove bottom surface 1312, and the third side surface 1311c is a conical surface.

In this embodiment, configuring the second side surface 1311b as an inclined surface facilitates gradually reducing the distance between the first side surface 711 and the second side surface 1311b along the first direction along the depth direction of the first groove 131. During assembly, the inclined second side surface 1311b can guide the pressure relief component 7, facilitating entry of the pressure relief component 7 into the first groove 131.

In some embodiments, referring to FIG. 13, at least a portion of a longitudinal section of the second side surface 1311b is arc-shaped, the longitudinal section of the second side surface 1311b being parallel to the first direction and the thickness direction Z of the first wall portion 13.

The longitudinal section of the second side surface 1311b may be entirely arc-shaped or only partially arc-shaped.

As an example, the second side surface 1311b is an arc surface, and an extension direction of a centerline of the second side surface 1311b, the first direction, and the thickness direction Z of the first wall portion 13 are pairwise perpendicular. A center of the arc of the longitudinal section of the second side surface 1311b lies on the centerline of the second side surface 1311b. A gap 8 along the first direction between a connection position of the first side surface 711 and the first groove bottom surface 1312 (shown in FIG. 7) and the second side surface 1311b is minimal. The extension direction of the centerline of the second side surface 1311b may be parallel to the width direction Y of the first wall portion 13, and the first direction may be parallel to the length direction X of the first wall portion 13.

As an example, the groove side surface 1311 includes two second side surfaces 1311b and two third side surfaces 1311c (shown in FIG. 9). One second side surface 1311b, one third side surface 1311c, another second side surface 1311b, and another third side surface 1311c are sequentially connected end-to-end to form a closed structure. Along the circumferential direction of the first groove 131, the third side surface 1311c extends along an arc direction. Both a cross-section and a longitudinal section of the third side surface 1311c are arc-shaped, where the longitudinal section of the third side surface 1311c is perpendicular to an extension direction of the third side surface 1311c; and the cross-section of the third side surface 1311c is parallel to the first direction and perpendicular to the thickness direction Z of the first wall portion 13.

In this embodiment, at least a portion of the longitudinal section of the second side surface 1311b being arc-shaped facilitates gradually reducing the distance between the first side surface 711 and the second side surface 1311b along the first direction along the depth direction of the first groove 131. During assembly, the second side surface 1311b can guide the pressure relief component 7, facilitating entry of the pressure relief component 7 into the first groove 131.

In some embodiments, referring to FIG. 11 to FIG. 13, the first side surface 711 is parallel to the thickness direction Z of the first wall portion 13.

As an example, the first side surface 711 is a flat surface perpendicular to the first groove bottom surface 1312 of the first groove 131.

As an example, a surface of the pressure relief component 7 facing the third side surface 1311c is parallel to the thickness direction Z of the first wall portion 13.

In this embodiment, the first side surface 711 being parallel to the thickness direction Z of the first wall portion 13 simplifies the structure of the pressure relief component 7, facilitating reduced forming difficulty of the pressure relief component 7.

In some embodiments, continuing to refer to FIG. 11 to FIG. 13, the pressure relief component 7 has a weak portion 73, the weak portion 73 is configured to be capable of rupturing to release internal pressure of the battery cell 10. The pressure relief component 7 is welded to the groove bottom wall 1313 of the first groove 131, forming the weld mark portion 133, along the first direction, the weld mark portion 133 is at least partially located between the first side surface 711 and the weak portion 73, a maximum distance between the first side surface 711 and the second side surface 1311b is denoted as B₁, a minimum distance between the weld mark portion 133 and the first side surface 711 is denoted as B₂, and a minimum distance between the weld mark portion 133 and the weak portion 73 is denoted as B₃, satisfying: 0.3 ≤ (B₁ + B₂) / B₃ ≤ 2.5.

The weak portion 73 is a portion of the pressure relief component 7 with lower strength compared to other regions. The weak portion 73 may be a portion of the pressure relief component 7 that has been weakened, for example, by locally annealing the pressure relief component 7 to reduce the strength of that region, thereby forming the weak portion 73; or, for example, by providing a groove on the pressure relief component 7 to form a weak region in the groove area. During thermal runaway of the battery cell 10, the pressure relief component 7 may rupture at the weak portion 73, opening the pressure relief component 7 to release the internal pressure of the battery cell 10.

As an example, the pressure relief component 7 is provided with a score groove 74, and the pressure relief component 7 forms the weak portion 73 in the region where the score groove 74 is provided. Along the first direction, the minimum distance between the weld mark portion 133 and the weak portion 73 may be the minimum distance between the weld mark portion 133 and an edge of a groove bottom surface of the score groove 74. The score groove 74 may extend along a closed trajectory, for example, the score groove 74 is an annular groove; and the score groove 74 may also extend along a non-closed trajectory, for example, the score groove 74 is an arc-shaped groove, a U-shaped groove, or an H-shaped groove. In the embodiments shown in FIG. 11 to FIG. 13, the score groove 74 is an annular groove, and the weld mark portion 133 is annularly disposed outside the score groove 74.

To reduce the machining depth of the score groove 74, a recessed groove 75 may be provided on the pressure relief component 7, with the score groove 74 disposed on a groove bottom surface of the recessed groove 75. The recessed groove 75 may be a polygonal groove, a circular groove, or the like.

Along the first direction, the distance between the two farthest positions of the first side surface 711 and the second side surface 1311b is the maximum distance between the first side surface 711 and the second side surface 1311b.

As an example, along the thickness direction Z of the first wall portion 13, the first wall portion 13 has a first surface 134, the first groove 131 is disposed on the first surface 134, the groove side surface 1311 (shown in FIG. 7) connects the first surface 134 and the first groove bottom surface 1312 (shown in FIG. 7), and a position where the first surface 134 connects with the groove side surface 1311 forms an opening of the first groove 131. A distance along the first direction between a position where the second side surface 1311b connects with the first surface 134 and the first side surface 711 may be the maximum distance between the first side surface 711 and the second side surface 1311b. Along the thickness direction Z of the first wall portion 13, the first surface 134 may face or face away from the interior of the housing 1.

Along the first direction, the distance between the two closest positions of the weld mark portion 133 and the first side surface 711 is the minimum distance between the weld mark portion 133 and the first side surface 711.

In this embodiment, (B₁ + B₂) / B₃ may be a point value of any one of 0.3 mm, 0.5 mm, 0.8 mm, 1 mm, 1.3 mm, 1.5 mm, 1.8 mm, 2 mm, 2.3 mm, and 2.5 mm, or a range value between any two of them.

In some embodiments, 0.8 ≤ (B₁ + B₂) / B₃ ≤ 1.5.

In this embodiment, (B₁ + B₂) / B₃ may be a point value of any one of 0.8 mm, 0.9 mm, 1 mm, 1.1 mm, 1.2 mm, 1.3 mm, 1.4 mm, and 1.5 mm, or a range value between any two of them.

In some embodiments, 0.05 mm ≤ B₁ ≤ 20 mm.

In this embodiment, B₁ may be a point value of any one of 0.05 mm, 0.1 mm, 0.5 mm, 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, and 20 mm, or a range value between any two of them.

B₁ ≥ 0.05 mm ensures a relatively large distance between the first side surface 711 and the second side surface 1311b, reducing the squeezing effect of the second side surface 1311b on the first side surface 711 when the first wall portion 13 deforms; and B₁ ≤ 20 mm ensures that the distance between the first side surface 711 and the second side surface 1311b is not excessively large, reducing the size of the first groove 131 in the first direction and lowering the forming difficulty of the first groove 131.

In some embodiments, 1.5 mm ≤ B₁ ≤ 10 mm.

In this embodiment, B₁ may be a point value of any one of 1.5 mm, 1.8 mm, 2 mm, 2.3 mm, 2.5 mm, 2.8 mm, 3 mm, 3.3 mm, 3.5 mm, 3.8 mm, 4 mm, 4.3 mm, 4.5 mm, 4.8 mm, 5 mm, 5.3 mm, 5.5 mm, 5.8 mm, 6 mm, 6.3 mm, 6.5 mm, 6.8 mm, 7 mm, 7.3 mm, 7.5 mm, 7.8 mm, 8 mm, 8.3 mm, 8.5 mm, 8.8 mm, 9 mm, 9.3 mm, 9.5 mm, 9.8 mm, and 10 mm, or a range value between any two of them.

In some embodiments, 0.1 mm ≤ B₂ ≤ 20 mm.

In this embodiment, B₂ may be a point value of any one of 0.1 mm, 0.5 mm, 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, and 20 mm, or a range value between any two of them.

In this embodiment, B₂ ≥ 0.1 mm ensures that the distance between the weld mark portion 133 and the first side surface 711 is not too small, reducing the risk of deformation in the region near the first side surface 711 during welding of the pressure relief component 7, which could reduce the gap 8; and B₂ ≤ 20 mm ensures that the distance between the weld mark portion 133 and the first side surface 711 is not excessively large, avoiding the need for an overly large pressure relief component 7, facilitating miniaturization of the pressure relief component 7.

In some embodiments, 2 mm ≤ B₂ ≤ 10 mm.

In this embodiment, B₂ may be a point value of any one of 2 mm, 2.3 mm, 2.5 mm, 2.8 mm, 3 mm, 3.3 mm, 3.5 mm, 3.8 mm, 4 mm, 4.3 mm, 4.5 mm, 4.8 mm, 5 mm, 5.3 mm, 5.5 mm, 5.8 mm, 6 mm, 6.3 mm, 6.5 mm, 6.8 mm, 7 mm, 7.3 mm, 7.5 mm, 7.8 mm, 8 mm, 8.3 mm, 8.5 mm, 8.8 mm, 9 mm, 9.3 mm, 9.5 mm, 9.8 mm, and 10 mm, or a range value between any two of them.

In some embodiments, 1 mm ≤ B₃ ≤ 20 mm.

In this embodiment, B₃ may be a point value of any one of 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, and 20 mm, or a range value between any two of them.

In this embodiment, B₃ ≥ 1 mm ensures sufficient distance between the weld mark portion 133 and the weak portion 73, reducing the impact of the weld mark portion 133 on the weak portion 73 and preventing the burst pressure of the pressure relief component 7 from being affected due to an excessively small distance between the weld mark portion 133 and the weak portion 73; and B₃ ≤ 20 mm ensures that the distance between the weld mark portion 133 and the weak portion 73 is not excessively large, facilitating miniaturization of the pressure relief component 7.

In some embodiments, 3 mm ≤ B₃ ≤ 10 mm.

In this embodiment, B₃ may be a point value of any one of 3 mm, 3.3 mm, 3.5 mm, 3.8 mm, 4 mm, 4.3 mm, 4.5 mm, 4.8 mm, 5 mm, 5.3 mm, 5.5 mm, 5.8 mm, 6 mm, 6.3 mm, 6.5 mm, 6.8 mm, 7 mm, 7.3 mm, 7.5 mm, 7.8 mm, 8 mm, 8.3 mm, 8.5 mm, 8.8 mm, 9 mm, 9.3 mm, 9.5 mm, 9.8 mm, and 10 mm, or a range value between any two of them.

In some embodiments, continuing to refer to FIG. 11 to FIG. 13, the first wall portion 13 is a rectangular wall portion, and the first direction is parallel to a length direction X of the first wall portion 13.

When observed along the thickness direction Z of the first wall portion 13, the first wall portion 13 is substantially rectangular. Two adjacent sides of the rectangle may be directly connected or connected via a rounded corner.

The length direction X, width direction Y, and thickness direction Z of the first wall portion 13 are pairwise perpendicular.

In this embodiment, since the first direction is parallel to the length direction X of the first wall portion 13, a gap 8 is formed between the first side surface 711 and the second side surface 1311b in the length direction X of the first wall portion 13, meaning that a gap 8 is formed between the pressure relief component 7 and the groove side surface 1311 of the first groove 131 along the length direction X of the first wall portion 13. As the first wall portion 13 is a rectangular wall portion, during swelling of the battery cell 10, the deformation amount of the first wall portion 13 along the length direction X is greater, and this gap 8 can provide a buffer space for the pressure relief component 7 along the length direction X of the first wall portion 13, reducing the risk of the groove side surface 1311 squeezing the pressure relief component 7 along the length direction X of the first wall portion 13 and causing deformation of the pressure relief component 7.

In some embodiments, referring to FIG. 14, FIG. 14 is a partial enlarged view at A of the battery cell 10 shown in FIG. 4. Along the thickness direction Z of the first wall portion 13, the pressure relief component 7 is located on a side of the pressure relief hole 132 facing away from the interior of the housing 1 (not shown in FIG. 14).

It can be understood that, along the thickness direction Z of the first wall portion 13, the pressure relief component 7 is located on a side of the pressure relief hole 132 facing away from the electrode assembly 2. The side of the pressure relief hole 132 facing away from the interior of the housing 1 is the side of the pressure relief hole 132 facing the exterior of the housing 1.

In this embodiment, the pressure relief component 7 being located on the side of the pressure relief hole 132 facing away from the interior of the housing 1 allows the pressure relief component 7 to be installed on an outer side of the first wall portion 13, making installation of the pressure relief component 7 more convenient.

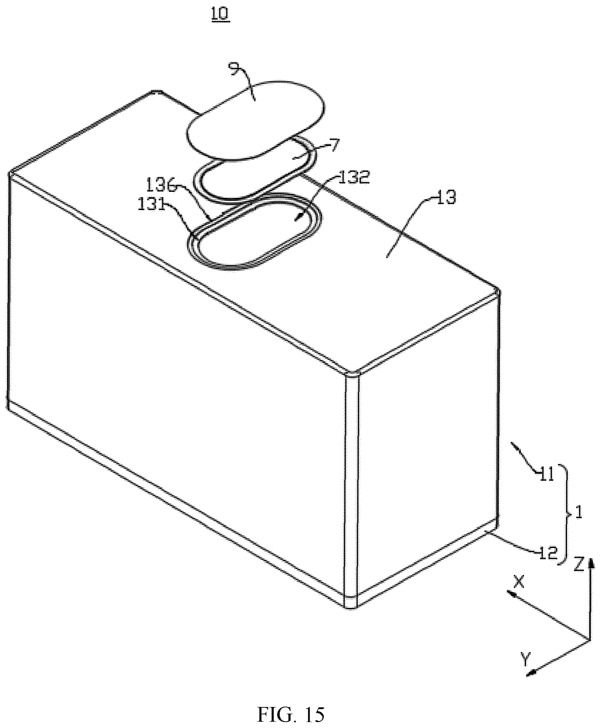

In some embodiments, referring to FIG. 15, FIG. 15 is an isometric view of a battery cell 10 according to some other embodiments of the present application (with both the pressure relief component 7 and the protective component 9 separated from the first wall portion 13). The battery cell 10 further includes a protective component 9, along the thickness direction Z of the first wall portion 13, the protective component 9 is located on a side of the pressure relief component 7 facing away from the interior of the housing 1, and the protective component 9 covers the first groove 131.

Along the thickness direction Z of the first wall portion 13, the side of the pressure relief component 7 facing away from the interior of the housing 1 is the outer side of the pressure relief component 7. The protective component 9 covers the first groove 131, shielding an opening of the first groove 131, and along the thickness direction Z of the first wall portion 13, a projection of the opening of the first groove 131 is entirely located within the protective component 9. The protective component 9 may be a flat plate structure, and the protective component 9 may be made of a metal material, such as copper, iron, aluminum, or steel. The protective component 9 may also be made of a non-metal material, such as plastic or rubber. The protective component 9 is fixed to the first wall portion 13, and the protective component 9 may be fixed to the first wall portion 13 by welding, bonding, or other methods.

In this embodiment, the protective component 9 can protect the pressure relief component 7, reducing the risk of external substances (impurities and electrolyte) entering the first groove 131 and corroding the pressure relief component 7.

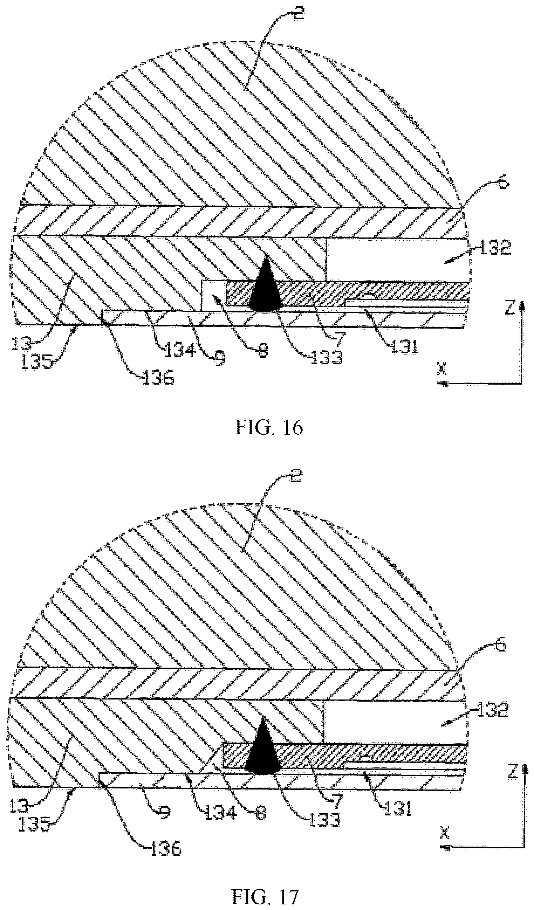

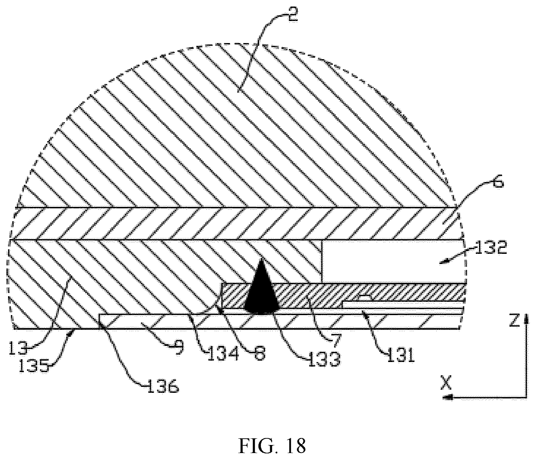

In some embodiments, referring to FIG. 16 to FIG. 18, FIG. 16 is a partial view of a battery cell 10 according to some embodiments of the present application; FIG. 17 is a partial view of a battery cell 10 according to some other embodiments of the present application; FIG. 18 is a partial view of a battery cell 10 according to some further embodiments of the present application. Along the thickness direction Z of the first wall portion 13, the first wall portion 13 has an outer surface 135 facing away from the interior of the housing 1, the outer surface 135 is provided with a second groove 136, the first groove 131 is disposed on a groove bottom surface of the second groove 136, and the protective component 9 is at least partially accommodated within the second groove 136.

The outer surface 135 of the first wall portion 13 may be a surface of the first wall portion 13 farthest from the electrode assembly 2 along the thickness direction Z. The groove bottom surface of the second groove 136 may be the first surface 134, the first groove 131 is disposed on the first surface 134, and the protective component 9 may abut against the first surface 134 to cover the first groove 131. The second groove 136 may be a polygonal groove, a circular groove, or the like. The protective component 9 may be partially accommodated within the second groove 136 or entirely located within the second groove 136.

In this embodiment, the first wall portion 13 being provided with the second groove 136, with the protective component 9 at least partially located within the second groove 136, can reduce the height by which the protective component 9 protrudes from the outer surface 135 of the first wall portion 13, minimizing the space occupied by the protective component 9 outside the housing 1.

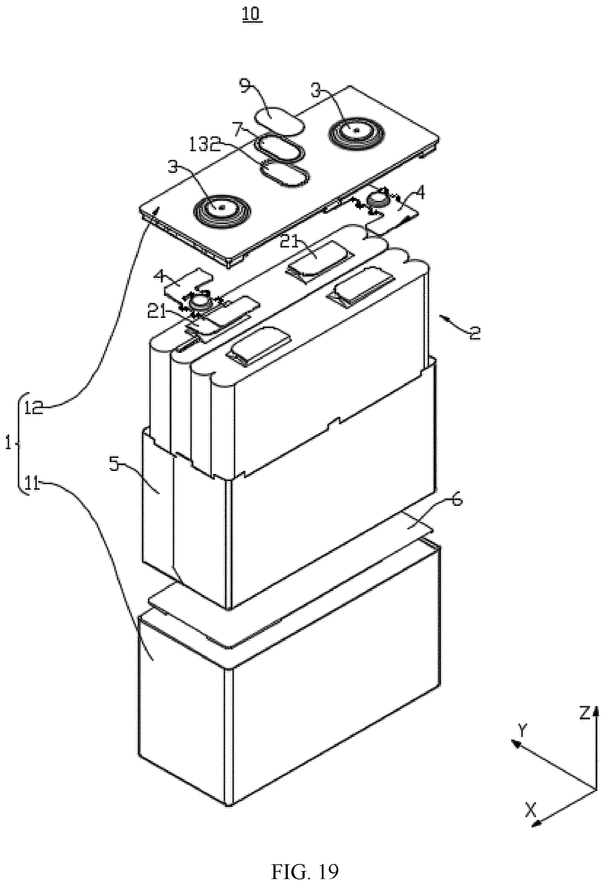

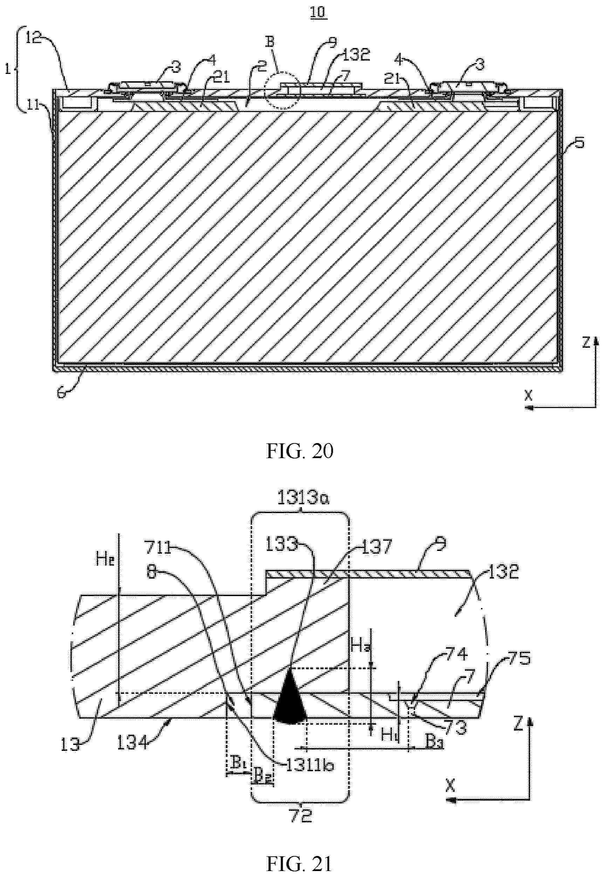

In some embodiments, referring to FIG. 19 and FIG. 20, FIG. 19 is an exploded view of a battery cell 10 according to some other embodiments of the present application; FIG. 20 is a cross-sectional view of the battery cell 10 shown in FIG. 19. Along the thickness direction Z of the first wall portion 13, the pressure relief component 7 is located on a side of the pressure relief hole 132 facing the interior of the housing 1.

It can be understood that, along the thickness direction Z of the first wall portion 13, the pressure relief component 7 is located on a side of the pressure relief hole 132 facing the electrode assembly 2.

In this embodiment, the pressure relief component 7 being located on the side of the pressure relief hole 132 facing the interior of the housing 1 allows the pressure relief component 7 to be installed on an inner side of the first wall portion 13, enabling the first wall portion 13 to protect the pressure relief component 7, reducing the risk of damage to the first wall portion 13 by external components.

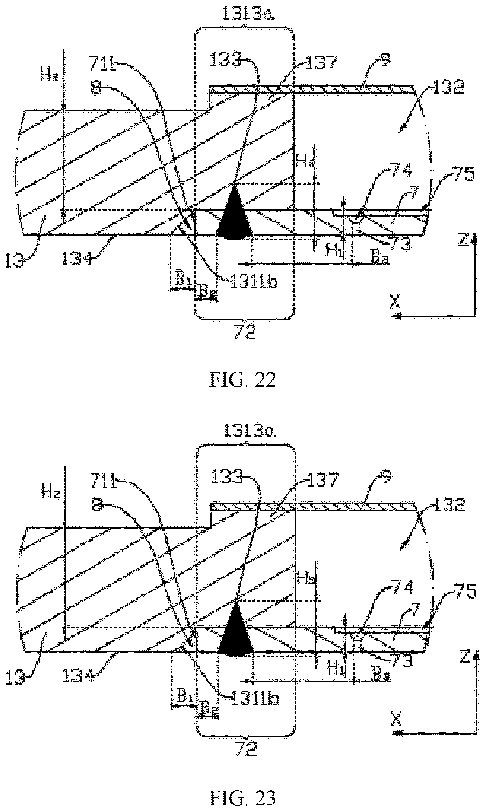

In some embodiments, referring to FIG. 21 to FIG. 23, FIG. 21 is a partial enlarged view at B of the battery cell 10 shown in FIG. 20; FIG. 22 is a partial view of the pressure relief component 7, protective component 9, and first wall portion 13 assembled according to some further embodiments of the present application; FIG. 23 is a partial view of the pressure relief component 7, protective component 9, and first wall portion 13 assembled according to some additional embodiments of the present application. The battery cell 10 further includes a protective component 9, along the thickness direction Z of the first wall portion 13, the protective component 9 is located on a side of the pressure relief hole 132 facing away from the interior of the housing 1 (shown in FIG. 20), and the protective component 9 covers the pressure relief hole 132.

Along the thickness direction Z of the first wall portion 13, the side of the pressure relief hole 132 facing away from the interior of the housing 1 is the side of the pressure relief hole 132 facing the exterior of the housing 1. Along the thickness direction Z of the first wall portion 13, the pressure relief component 7 and the protective component 9 are respectively located on two sides of the pressure relief hole 132, with the pressure relief component 7 located on the side of the pressure relief hole 132 facing the interior of the housing 1, and the protective component 9 located on the side of the pressure relief hole 132 facing away from the interior of the housing 1.

The protective component 9 covers the pressure relief hole 132, shielding the pressure relief hole 132, and along the thickness direction Z of the first wall portion 13, a projection of a hole wall surface of the pressure relief hole 132 may be entirely located within the protective component 9.

As an example, along the thickness direction Z of the first wall portion 13, a side of the first wall portion 13 facing away from the interior of the housing 1 is formed with a protrusion 137 surrounding the pressure relief hole 132, and the protective component 9 is fixed to the protrusion 137 to cover the pressure relief hole 132.

In this embodiment, the protective component 9 can protect the pressure relief component 7, reducing the risk of external substances (impurities and electrolyte) entering the pressure relief hole 132 and corroding the pressure relief component 7.

In some embodiments, the housing 1 includes a shell 11 and an end cap 12, the shell 11 has an opening, and the end cap 12 closes the opening. The end cap 12 is the first wall portion 13; and/or at least one wall portion of the shell 11 is the first wall portion 13.

In an embodiment where the end cap 12 is the first wall portion 13, if the housing 1 includes only one end cap 12, this end cap 12 is the first wall portion 13; and if the housing 1 includes two end caps 12, one end cap 12 may be the first wall portion 13, or both end caps 12 may be the first wall portion 13. As an example, in the embodiments shown in FIG. 19 to FIG. 23, the shell 11 is a hollow structure with an opening formed at one end, the end cap 12 is one, and this end cap 12 is the first wall portion 13.

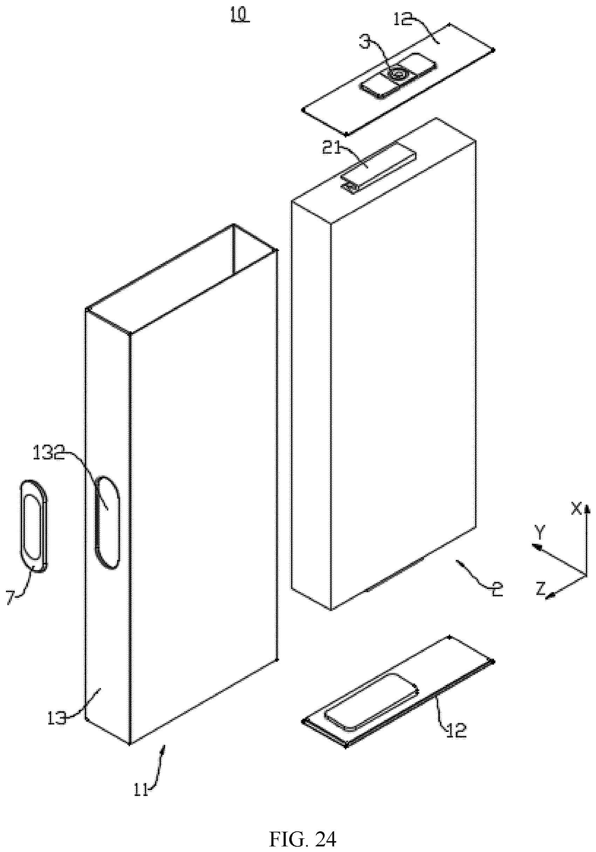

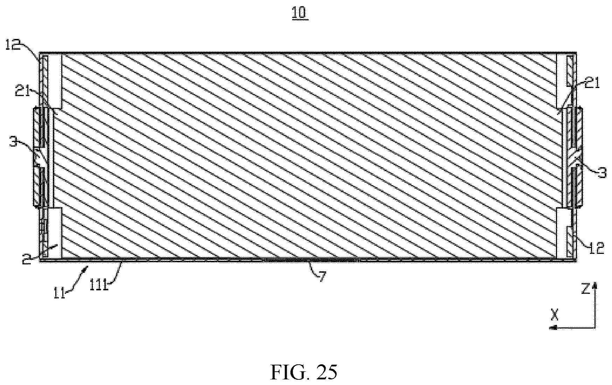

In an embodiment where at least one wall portion of the shell 11 is the first wall portion 13, one wall portion of the shell 11 may be the first wall portion 13, or multiple wall portions of the shell 11 may be the first wall portion 13. In some embodiments, the shell 11 is a hollow structure with an opening formed at one end, and a wall portion of the shell 11 opposite the end cap 12 serves as the first wall portion 13. In other embodiments, referring to FIG. 24 and FIG. 25, FIG. 24 is an exploded view of a battery cell 10 according to still some further embodiments of the present application; and FIG. 25 is a cross-sectional view of the battery cell 10 shown in FIG. 24. The shell 11 is a hollow structure with openings formed at opposite ends, the end cap 12 includes two end caps, both end caps 12 are each provided with an electrode terminal 3, and opposite ends of the electrode assembly 2 are each formed with a tab 21. An electrode terminal 3 on one end cap 12 is electrically connected to a tab 21 at one end of the electrode assembly 2, and an electrode terminal 3 on the other end cap 12 is electrically connected to a tab 21 at the other end of the electrode assembly 2. One wall portion of the shell 11 is the first wall portion 13, and the first wall portion 13 supports the electrode assembly 2 along a gravity direction.

An embodiment of the present application provides a battery 100 including the battery cell 10 provided in any one of the above embodiments.

An embodiment of the present application provides an electric apparatus including the battery cell 10 provided in any one of the above embodiments.

An embodiment of the present application further provides a battery cell 10, the battery cell 10 including a housing 1, an electrode assembly 2, a pressure relief component 7, and a protective component 9, with the electrode assembly 2 accommodated within the housing 1. The housing 1 includes a shell 11 and an end cap 12, the shell 11 has an opening formed at one end, and the end cap 12 closes the opening of the shell 11. A wall portion of the shell 11 opposite the end cap 12 is a first wall portion 13, along a thickness direction Z of the first wall portion 13, the first wall portion 13 has an outer surface 135 facing away from the interior of the housing 1, the outer surface 135 is provided with a second groove 136, a groove bottom surface of the second groove 136 is provided with a first groove 131, the first groove 131 includes a groove side surface 1311 and a first groove bottom surface 1312, the groove side surface 1311 surrounds the first groove bottom surface 1312, and the first groove bottom surface 1312 is provided with a pressure relief hole 132. The pressure relief component 7 is disposed within the first groove 131, the pressure relief component 7 abuts against the first groove bottom surface 1312 and covers the pressure relief hole 132, along the thickness direction Z of the first wall portion 13, the pressure relief component 7 is located on a side of the pressure relief hole 132 facing away from the electrode assembly 2. The entire groove side surface 1311 along a circumferential direction of the first groove 131 forms a gap 8 with the pressure relief component 7. The protective component 9 is disposed within the second groove 136 and covers the first groove 131.

The pressure relief component 7 includes a first welding region 72, the groove bottom wall 1313 includes a second welding region 1313a, the second welding region 1313a defines the pressure relief hole 132, the first welding region 72 and the second welding region 1313a are overlapped along the thickness direction Z of the first wall portion 13, the first welding region 72 and the second welding region 1313a are welded together, forming the weld mark portion 133. Along the thickness direction Z of the first wall portion 13, a projection of the weld mark portion 133 is entirely located within the pressure relief component 7, a minimum thickness of the first welding region 72 is denoted as H₁, a minimum thickness of the second welding region 1313a is denoted as H₂, and a maximum height of the weld mark portion 133 is denoted as H₃, satisfying: H₁ < H₃ ≤ H₁ + H₂, 0.2 mm ≤ H₁ ≤ 1 mm, and 0.2 mm ≤ H₂ ≤ 5 mm.

The first wall portion 13 is a rectangular wall portion, along a length direction X of the first wall portion 13, opposite ends of the pressure relief component 7 each form a first side surface 711, the groove side surface 1311 includes second side surfaces 1311b facing the first side surfaces 711, the second side surfaces 1311b correspond one-to-one with the first side surfaces 711, a gap 8 is formed between each first side surface 711 and the corresponding second side surface 1311b, the length direction X of the first wall portion 13 is perpendicular to the thickness direction Z of the first wall portion 13, and the first side surfaces 711 are parallel to the thickness direction Z of the first wall portion 13. The second side surface 1311b is parallel to the thickness direction Z of the first wall portion 13; or, the second side surface 1311b is an inclined surface disposed at a non-zero angle with respect to the thickness direction Z of the first wall portion 13; or, a longitudinal section of the second side surface 1311b is arc-shaped, the longitudinal section of the second side surface 1311b being parallel to the length direction X and thickness direction Z of the first wall portion 13. The pressure relief component 7 has a weak portion 73, the weak portion 73 and the weld mark portion 133 are both annular, the weld mark portion 133 surrounds an outer side of the weak portion 73, and an outer peripheral surface 71 of the pressure relief component 7 surrounds an outer side of the weak portion 73. Along the length direction X of the first wall portion 13, a maximum distance between the first side surface 711 and the second side surface 1311b is denoted as B₁, a minimum distance between the weld mark portion 133 and the first side surface 711 is denoted as B₂, and a minimum distance between the weld mark portion 133 and the weak portion 73 is denoted as B₃, satisfying: 0.3 ≤ (B₁ + B₂) / B₃ ≤ 2.5, 0.05 mm ≤ B₁ ≤ 20 mm, 0.1 mm ≤ B₂ ≤ 20 mm, and 1 mm ≤ B₃ ≤ 20 mm.

An embodiment of the present application further provides a battery cell 10, the battery cell 10 including a housing 1, an electrode assembly 2, a pressure relief component 7, and a protective component 9, with the electrode assembly 2 accommodated within the housing 1. The housing 1 includes a shell 11 and an end cap 12, the shell 11 has an opening formed at one end, and the end cap 12 closes the opening of the shell 11. The end cap 12 is a first wall portion 13, along a thickness direction Z of the first wall portion 13, the first wall portion 13 has a first surface 134, the first surface 134 being an inner surface of the first wall portion 13, the first surface 134 is provided with a first groove 131, the first groove 131 includes a groove side surface 1311 and a first groove bottom surface 1312, the groove side surface 1311 surrounds the first groove bottom surface 1312, and the first groove bottom surface 1312 is provided with a pressure relief hole 132. The pressure relief component 7 is disposed within the first groove 131, the pressure relief component 7 abuts against the first groove bottom surface 1312 and covers the pressure relief hole 132, along the thickness direction Z of the first wall portion 13, the pressure relief component 7 is located on a side of the pressure relief hole 132 facing the electrode assembly 2. The entire groove side surface 1311 along a circumferential direction of the first groove 131 forms a gap 8 with the pressure relief component 7. Along the thickness direction Z of the first wall portion 13, the protective component 9 is disposed on a side of the pressure relief hole 132 facing away from the electrode terminals 3, and the protective component 9 covers the first groove 131.

The pressure relief component 7 includes a first welding region 72, the groove bottom wall 1313 includes a second welding region 1313a, the second welding region 1313a defines the pressure relief hole 132, the first welding region 72 and the second welding region 1313a are overlapped along the thickness direction Z of the first wall portion 13, the first welding region 72 and the second welding region 1313a are welded together, forming the weld mark portion 133. Along the thickness direction Z of the first wall portion 13, a projection of the weld mark portion 133 is entirely located within the pressure relief component 7, a minimum thickness of the first welding region 72 is denoted as H₁, a minimum thickness of the second welding region 1313a is denoted as H₂, and a maximum height of the weld mark portion 133 is denoted as H₃, satisfying: H₁ < H₃ ≤ H₁ + H₂, 0.2 mm ≤ H₁ ≤ 1 mm, and 0.2 mm ≤ H₂ ≤ 5 mm.

The first wall portion 13 is a rectangular wall portion, along a length direction X of the first wall portion 13, opposite ends of the pressure relief component 7 each form a first side surface 711, the groove side surface 1311 includes second side surfaces 1311b facing the first side surfaces 711, the second side surfaces 1311b correspond one-to-one with the first side surfaces 711, a gap 8 is formed between each first side surface 711 and the corresponding second side surface 1311b, the length direction X of the first wall portion 13 is perpendicular to the thickness direction Z of the first wall portion 13, and the first side surfaces 711 are parallel to the thickness direction Z of the first wall portion 13. The second side surface 1311b is parallel to the thickness direction Z of the first wall portion 13; or, the second side surface 1311b is an inclined surface disposed at a non-zero angle with respect to the thickness direction Z of the first wall portion 13; or, a longitudinal section of the second side surface 1311b is arc-shaped, the longitudinal section of the second side surface 1311b being parallel to the length direction X and thickness direction Z of the first wall portion 13. The pressure relief component 7 has a weak portion 73, the weak portion 73 and the weld mark portion 133 are both annular, the weld mark portion 133 surrounds an outer side of the weak portion 73, and an outer peripheral surface 71 of the pressure relief component 7 surrounds an outer side of the weak portion 73. Along the length direction X of the first wall portion 13, a maximum distance between the first side surface 711 and the second side surface 1311b is denoted as B₁, a minimum distance between the weld mark portion 133 and the first side surface 711 is denoted as B₂, and a minimum distance between the weld mark portion 133 and the weak portion 73 is denoted as B₃, satisfying: 0.3 ≤ (B₁ + B₂) / B₃ ≤ 2.5, 0.05 mm ≤ B₁ ≤ 20 mm, 0.1 mm ≤ B₂ ≤ 20 mm, and 1 mm ≤ B₃ ≤ 20 mm.

It should be noted that, in the absence of conflict, the embodiments in the present application and the features in the embodiments may be combined with each other.

The above embodiments are only used to illustrate the technical solutions of the present application and are not intended to limit the present application. For those skilled in the art, various modifications and changes can be made to the present application. Any modifications, equivalent replacements, and improvements made without departing from the spirit and principle of the present application shall fall within the protection scope of the present application.

## Claims

1. A battery cell comprising:
a housing comprising a first wall portion, the first wall portion being provided with a first groove, the first groove comprising a groove side surface and a first groove bottom surface, the groove side surface surrounding the first groove bottom surface, and the first groove bottom surface being provided with a pressure relief hole; and
a pressure relief component disposed within the first groove, the pressure relief component abutting against the first groove bottom surface and covering the pressure relief hole;
wherein at least a portion of the groove side surface along a circumferential direction of the first groove forms a gap with the pressure relief component.

2. The battery cell according to claim 1, wherein the groove side surface comprises a first region forming a gap with the pressure relief component; and
along the circumferential direction of the first groove, a length of the first region is denoted as L₁, and a perimeter of the groove side surface is denoted as L, satisfying: 0.2 ≤ L₁/L ≤ 1; optionally, 0.5 ≤ L₁/L ≤ 1.

3. The battery cell according to claim 1 or 2, wherein the entire groove side surface along the circumferential direction of the first groove forms a gap with the pressure relief component.

4. The battery cell according to any one of claims 1 to 3, wherein the pressure relief component is welded to a groove bottom wall of the first groove, forming a weld mark portion.

5. The battery cell according to claim 4, wherein, along a thickness direction of the first wall portion, a projection of the weld mark portion is entirely located within the pressure relief component.

6. The battery cell according to claim 5, wherein the pressure relief component and the groove bottom wall have an overlapping region, the overlapping region comprising a first welding region located in the pressure relief component and a second welding region located in the groove bottom wall, the second welding region defining the pressure relief hole, and the first welding region and the second welding region being welded together, forming the weld mark portion; and
along the thickness direction of the first wall portion, a minimum thickness of the first welding region is denoted as H₁, a minimum thickness of the second welding region is denoted as H₂, and a maximum height of the weld mark portion is denoted as H₃, satisfying: H₁ < H₃ ≤ H₁ + H₂.

7. The battery cell according to claim 6, wherein 0.2 mm ≤ H₁ ≤ 1 mm; optionally, 0.45 mm ≤ H₁ ≤ 0.75 mm.

8. The battery cell according to claim 6 or 7, wherein 0.2 mm ≤ H₂ ≤ 5 mm; optionally, 0.8 mm ≤ H₂ ≤ 3 mm.

9. The battery cell according to any one of claims 1 to 8, wherein, along a first direction, at least one end of the pressure relief component forms a first side surface, the groove side surface comprises a second side surface facing the first side surface, and a gap is formed between the first side surface and the second side surface, the first direction intersecting with the thickness direction of the first wall portion.

10. The battery cell according to claim 9, wherein the first side surface is parallel to the second side surface.

11. The battery cell according to claim 9 or 10, wherein the second side surface is parallel to the thickness direction of the first wall portion.

12. The battery cell according to claim 9, wherein a distance between the first side surface and the second side surface along the first direction gradually decreases along a depth direction of the first groove.

13. The battery cell according to claim 12, wherein the second side surface is an inclined surface disposed at a non-zero angle with respect to the thickness direction of the first wall portion.

14. The battery cell according to claim 12, wherein at least a portion of a longitudinal section of the second side surface is arc-shaped, the longitudinal section being parallel to the first direction and the thickness direction of the first wall portion.

15. The battery cell according to any one of claims 9 to 14, wherein the first side surface is parallel to the thickness direction of the first wall portion.

16. The battery cell according to any one of claims 9 to 15, wherein the pressure relief component has a weak portion, the weak portion being configured to be capable of rupturing to release internal pressure of the battery cell; and
the pressure relief component is welded to the groove bottom wall of the first groove, forming the weld mark portion, along the first direction, the weld mark portion is at least partially located between the first side surface and the weak portion, a maximum distance between the first side surface and the second side surface is denoted as B₁, a minimum distance between the weld mark portion and the first side surface is denoted as B₂, and a minimum distance between the weld mark portion and the weak portion is denoted as B₃, satisfying: 0.3 ≤ (B₁ + B₂) / B₃ ≤ 2.5; optionally, 0.8 ≤ (B₁ + B₂) / B₃ ≤ 1.5.

17. The battery cell according to claim 16, wherein 0.05 mm ≤ B₁ ≤ 20 mm; optionally, 1.5 mm ≤ B₁ ≤ 10 mm.

18. The battery cell according to claim 16 or 17, wherein 0.1 mm ≤ B₂ ≤ 20 mm; optionally, 2 mm ≤ B₂ ≤ 10 mm.

19. The battery cell according to any one of claims 16 to 18, wherein 1 mm ≤ B₃ ≤ 20 mm; optionally, 3 mm ≤ B₃ ≤ 10 mm.

20. The battery cell according to any one of claims 9 to 19, wherein the first wall portion is a rectangular wall portion, and the first direction is parallel to a length direction of the first wall portion.

21. The battery cell according to any one of claims 1 to 20, wherein, along the thickness direction of the first wall portion, the pressure relief component is located on a side of the pressure relief hole facing away from the interior of the housing.

22. The battery cell according to claim 21, wherein the battery cell further comprises a protective component, along the thickness direction of the first wall portion, the protective component is located on a side of the pressure relief component facing away from the interior of the housing, and the protective component covers the first groove.

23. The battery cell according to claim 22, wherein, along the thickness direction of the first wall portion, the first wall portion has an outer surface facing away from the interior of the housing, the outer surface is provided with a second groove, the first groove is disposed on a groove bottom surface of the second groove, and the protective component is at least partially accommodated within the second groove.

24. The battery cell according to any one of claims 1 to 20, wherein, along the thickness direction of the first wall portion, the pressure relief component is located on a side of the pressure relief hole facing the interior of the housing.

25. The battery cell according to claim 24, wherein the battery cell further comprises a protective component, along the thickness direction of the first wall portion, the protective component is located on a side of the pressure relief hole facing away from the interior of the housing, and the protective component covers the pressure relief hole.

26. The battery cell according to any one of claims 1 to 25, wherein the housing comprises:
a shell having an opening; and
an end cap closing the opening;
wherein the end cap is the first wall portion; and/or at least one wall portion of the shell is the first wall portion.

27. A battery comprising the battery cell according to any one of claims 1 to 26.

28. An electric apparatus comprising the battery cell according to any one of claims 1 to 26.
